(19) Europäisches Patentamt
European Patent Office
Office européen des brevets

(11) **EP 3 818 390 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **19731634.2**

(22) Anmeldetag: **07.06.2019**

(51) Internationale Patentklassifikation (IPC):
**G01S 13/93** (2020.01)  **G01S 13/42** (2006.01)
**G01S 13/32** (2006.01)  **G01S 13/34** (2006.01)

(52) Gemeinsame Patentklassifikation (CPC):
**G01S 13/931; G01S 13/325; G01S 13/343; G01S 13/42;** G01S 7/356; G01S 13/5246

(86) Internationale Anmeldenummer:
**PCT/EP2019/065001**

(87) Internationale Veröffentlichungsnummer:
**WO 2020/007573 (09.01.2020 Gazette 2020/02)**

(54) **VERFAHREN ZUR ERMITTLUNG VON WENIGSTENS EINER OBJEKTINFORMATION WENIGSTENS EINES ZIELOBJEKTS, DAS MIT EINEM RADARSYSTEM INSBESONDERE EINES FAHRZEUGS ERFASST WIRD, RADARSYSTEM UND FAHRERASSISTENZSYSTEM**

METHOD FOR DETERMINING AT LEAST ONE ITEM OF OBJECT INFORMATION ABOUT AT LEAST ONE TARGET OBJECT SENSED BY MEANS OF A RADAR SYSTEM, IN PARTICULAR OF A VEHICLE, RADAR SYSTEM, AND DRIVER ASSISTANCE SYSTEM

PROCÉDÉ POUR DÉTERMINER AU MOINS UNE INFORMATION RELATIVE À AU MOINS UN OBJET CIBLE DÉTECTÉ PAR UN SYSTÈME RADAR EN PARTICULIER D'UN VÉHICULE, SYSTÈME RADAR ET SYSTÈME D'AIDE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018 DE 102018116378**

(43) Veröffentlichungstag der Anmeldung:
**12.05.2021 Patentblatt 2021/19**

(73) Patentinhaber: **Valeo Schalter und Sensoren GmbH**
**74321 Bietigheim-Bissingen (DE)**

(72) Erfinder:
• **STURM, Christian**
**74321 Bietigheim-Bissingen (DE)**
• **AFRASIABI VAYGHAN, Hamid**
**74321 Bietigheim-Bissingen (DE)**
• **SIT, Yoke Leen**
**74321 Bietigheim-Bissingen (DE)**
• **LI, Gang**
**74321 Bietigheim-Bissingen (DE)**

(74) Vertreter: **Withopf, Kristina**
**Valeo Schalter und Sensoren GmbH**
**CDA-IP**
**Laiernstraße 12**
**74321 Bietigheim-Bissingen (DE)**

(56) Entgegenhaltungen:
**US-A1- 2008 042 895      US-A1- 2017 254 879**
**US-A1- 2018 120 427      US-B2- 9 182 476**

• **STURM CHRISTIAN ET AL: "Automotive Fast-Chirp MIMO Radar with Simultaneous Transmission in a Doppler-Multiplex", 2018 19TH INTERNATIONAL RADAR SYMPOSIUM (IRS), GERMAN INSTITUTE OF NAVIGATION - DGON, 20. Juni 2018 (2018-06-20), Seiten 1-6, XP033393869, DOI: 10.23919/IRS.2018.8447895 [gefunden am 2018-08-27]**
• **SAMALA SREEKIRAN: "Signal processing and frequency generation in FMCW RADAR", 2018 IEEE CUSTOM INTEGRATED CIRCUITS CONFERENCE (CICC), IEEE, 8. April 2018 (2018-04-08), Seiten 1-73, XP033339214, DOI: 10.1109/CICC.2018.8357114 [gefunden am 2018-05-09]**

## Beschreibung

### Technisches Gebiet

Die Erfindung betrifft ein Verfahren zur Ermittlung von wenigstens einer Objektinformation wenigstens eines Zielobjektes, das mit einem Radarsystem insbesondere eines Fahrzeugs erfasst wird, bei dem

- mit wenigstens drei Sendern Sendesignale in einen Überwachungsbereich des Radarsystems gesendet werden,

- mit wenigstens zwei Empfängern an dem wenigstens einen Zielobjekt reflektierte Echos der Sendesignale als Empfangssignale empfangen und sofern erforderlich in eine für eine elektronische Steuer- und/oder Auswerteeinrichtung verwertbare Form gebracht werden,

- die Empfangssignale wenigstens einer diskreten Fourier-Transformation unterzogen werden,

- aus dem Ergebnis der wenigstens einen Fourier-Transformation wenigstens ein Zielsignal ermittelt wird,

- aus dem wenigstens einen Zielsignal wenigstens eine Objektinformation ermittelt wird.

Ferner betrifft die Erfindung ein Radarsystem insbesondere eines Fahrzeugs zur Ermittlung von wenigstens einer Objektinformation wenigstens eines Zielobjekts,

- mit wenigstens drei Sendern zum Senden von Sendesignalen in einen Überwachungsbereich,

- mit wenigstens zwei Empfängern zum Empfangen von an dem wenigstens einen Zielobjekt reflektierten Echos der Sendesignale als Empfangssignale und

- mit wenigstens einer Steuer- und/oder Auswerteeinrichtung,

- wobei die wenigstens eine Steuer- und/oder Auswerteeinrichtung Mittel aufweist zur Ermittlung wenigstens eines Zielsignals aus wenigstens einer diskreten Fourier-Transformation der Empfangssignale und zur Ermittlung wenigstens einer Objektinformation aus wenigstens einem Zielsignal.

Außerdem betrifft die Erfindung ein Fahrerassistenzsystem eines Fahrzeugs, aufweisend

- wenigstens eine elektronische Steuereinrichtung zur Steuerung von Funktionseinrichtungen des Fahrzeugs abhängig von Objektinformationen, welche durch wenigstens ein Radarsystem bereitgestellt werden, und

- wenigstens ein Radarsystem zur Ermittlung von wenigstens einer Objektinformation wenigstens eines Zielobjekts, wobei das wenigstens eine Radarsystem aufweist

- wenigstens drei Sender zum Senden von Sendesignalen in einen Überwachungsbereich,

- wenigstens zwei Empfänger zum Empfangen von an dem wenigstens einen Zielobjekt reflektierten Echos der Sendesignale als Empfangssignale und

- wenigstens eine Steuer- und/oder Auswerteeinrichtung,

- wobei die wenigstens eine Steuer- und/oder Auswerteeinrichtung Mittel aufweist zur Ermittlung wenigstens eines Zielsignals aus wenigstens einer diskreten Fourier-Transformation der Empfangssignale und zur Ermittlung wenigstens einer Objektinformation aus wenigstens einem Zielsignal.

### Stand der Technik

Aus der DE 10 2004 006 519 B4 ist ein Verfahren zum Anordnen einer Mehrzahl von Sendeantennen und einer Mehrzahl von Empfangsantennen für eine Radarvorrichtung bekannt, die mit einer Mehrzahl von Kanälen ausgestattet ist. Jeder der Mehrzahl von Kanälen besteht aus einer Kombination von einer der Mehrzahl von Sendeantennen und einer der Mehrzahl von Empfangsantennen. Die Radarvorrichtung dient zum Bestimmen einer Richtung zu einem Ziel durch Senden einer elektrischen Welle zu dem Ziel und Empfangen der von dem Ziel reflektierten elektrischen Welle über jeden der Mehrzahl von Kanälen. Die Radarvorrichtung weist einen Signalprozessor zum Ausgeben einer Modulationsanweisung zu einem D/A-Wandler und zum Ausführen der Signalverarbeitung bezüglich den abgetasteten Daten eines Überlagerungssignals, das von einem A/D-Wandler aufgenommen wird, auf, um den Abstand und die relative Geschwindigkeit zu einem Ziel, das die Radarwellen reflektiert, und die Richtung zu der Position zu bestimmen, in welcher das Ziel vorhanden ist. Der Signalprozessor besteht hauptsächlich aus einem bekannten Mikrocomputer, der eine CPU, einen ROM und einen RAM aufweist, und weist eine Betriebsverarbeitungsvorrichtung (zum Beispiel einen DSP) zum Ausführen einer Verarbeitung einer schnellen Fourier-Transformation beziehungsweise FFT bezüglich Daten auf, die von dem A/D Wandler empfangen werden.

Die Veröffentlichung von Christian Sturm et al.: "Automotive Fast-Chip MIMO Radar with Simultaneous Transmission in a Doppler-Multiplex", 19th International Radar Symposium, 20. Juni 2018, Seiten 1-6, XP033393869, DOI: 10.23919/IRS.2018.8447895, präsentiert einen Ansatz, der die simultane Ausstrahlung von Fast-Chirp-Wellenformen von mehreren Sendeantennen mit perfekter Orthogonalität erlaubt.

US 2018/120427 A1 offenbart ein Radar umfassend zumindest eine Array-Antenne bestehend aus Sende-Sub-Arrays und aus Empfangs-Sub-Arrays, ein Sende- und Empfangssystem und Verarbeitungsmittel.

Der Erfindung liegt die Aufgabe zugrunde, ein Verfahren, ein Radarsystem und ein Fahrerassistenzsystem der eingangs genannten Art zu gestalten, bei denen Objektinformationen, insbesondere Abstand, Geschwindigkeit und/oder Richtung des wenigstens einen Objektes relativ zum Radarsystem, einfacher und/oder genauer ermittelt werden können.

**Offenbarung der Erfindung**

Diese Aufgabe wird durch den Gegenstand der unabhängigen Ansprüche gelöst. Bevorzugte Ausführungsformen sind Gegenstand der abhängigen Patentansprüche.

Bei dem Verfahren ist vorgesehen, dass

-    auf der Senderseite aus einem frequenzmodulierten Dauerstrichsignal wenigstens ein erstes Sendesignal, wenigstens ein zweites Sendesignal und wenigstens ein drittes Sendesignal erzeugt werden, wobei das wenigstens eine zweite Sendesignal und das wenigstens eine dritte Sendesignal mittels Phasenmodulationen gegenüber dem wenigstens einen ersten Sendesignal codiert werden, so dass eine zumindest temporäre signaltechnische Orthogonalität zwischen den Sendesignalen erzielt wird,

-    das wenigstens eine erste Sendesignal mit wenigstens einem ersten Sender, das wenigstens eine zweite Sendesignal mit wenigstens einem zweiten Sender und das wenigstens eine dritte Sendesignal mit wenigstens einem dritten Sender gleichzeitig in den Überwachungsbereich des Radarsystems gesendet werden,

-    die Empfangssignale wenigstens einer mehrdimensionalen diskreten Fourier-Transformation unterzogen werden.

Das wenigstens eine zweite Sendesignal wird mit regelmäßigen Sendepausen vorgegebener Länge ausgesendet.

Es wird das Ergebnis der wenigstens einen mehrdimensionalen Fourier-Transformation für alle Empfänger kombiniert und jeden Empfänger einzeln jeweils als Entfernungs-Doppler-Matrix für einen Eindeutigkeitsbereich bezüglich einer Dopplerdimension realisiert werden. Dabei kann die Entfernungs-Doppler-Matrix aus Zellen bestehen, welche jeweils durch einen Dopplerwert und einen Entfernungswert charakterisiert werden können und eine komplexwertige Amplitude aufweisen können, die eine Signalintensität charakterisieren kann. Die Entfernungs-Doppler-Matrix kann in vier Teilmatrizen mit gleicher Ausdehnung bezüglich der Doppler-Dimension unterteilt werden. Für jeden Entfernungswert können die Beträge der Amplituden der jeweils bezüglich ihres Dopplerwerts rangmäßig entsprechenden Zellen der Teilmatrizen zu einem jeweiligen Spektrumswert kombiniert werden. Aus den Spektrumswerten können diejenigen ermittelt werden, welche über einer vorgegebenen Schwelle liegen und als zu einem jeweiligen Zielsignal gehörende Ziel-Spektrumswerte erkannt werden.

Die Dimension einer Zelle in der Entfernungs-Doppler-Matrix in der Entfernungsdimension wird als Entfernungstor bezeichnet. Die Dimension einer Zelle in der Dopplerdimension wird als Dopplertor bezeichnet. Jedes Entfernungstor ist durch ein Entfernungswert und jedes Dopplertor durch einen Dopplerwert charakterisiert. Damit ist jede Zelle in der Entfernungs-Doppler-Matrix durch einen Entfernungswert und einen Dopplerwert charakterisiert.

Es wird für wenigstens einen Ziel-Spektrumswert aus der Kombination aller Empfänger eine Differenz der komplexwertigen Amplituden der zu diesem Ziel-Spektrumswert gehörenden Zellen mit dem kleinsten Dopplerwert und dem drittkleinsten Dopplerwert gebildet, der Betrag dieser Differenz quadriert und einem erster Vergleichswert zugewiesen. Eine Differenz der komplexwertigen Amplituden der zu diesem Ziel-Spektrumswert gehörenden Zellen mit dem zweitkleinsten Dopplerwert und dem größten Dopplerwert kann gebildet, der Betrag dieser Differenz kann quadriert und einem zweiten Vergleichswert zugewiesen werden. Der erste Vergleichswert und der zweite Vergleichswert können verglichen und die Signale, welche zu den Zellen gehören, aus deren Amplituden der kleinere der beiden Vergleichswerte gebildet ist, als die zwei Zielsignale für dasselbe Zielobjekt, die von dem wenigstens einen zweiten Sendesignal herrühren, können validiert werden.

Für jeden Entfernungswert werden die Beträge der Amplituden der jeweils bezüglich ihres Dopplerwerts rangmäßig entsprechenden Zellen der Teilmatrizen zu einem jeweiligen Spektrumswert kombiniert. Insbesondere werden insgesamt vier Beträge - für jede der Teilmatrizen ein Betrag - die bezüglich ihres Dopplerwerts gleichrangig sind, addiert. Beispielsweise sind die Zellen bezüglich ihres Dopplerwerts gleichrangig, welche in ihrer jeweiligen Teilmatrix den kleinsten Dopplerwert aufweisen. Entsprechend sind die Zellen gleichrangig, die in ihrer jeweiligen Teilmatrix den zweitkleinsten Dopplerwert aufweisen usw.

Aus den Spektrumswerten werden diejenigen ermittelt, welche in Bezug auf ihre Leistung über einer vorgegebenen Rauschschwelle liegen. Diese Spektrumswerte werden als zu einem jeweiligen Zielsignal gehörende Ziel-Spektrumswerte erkannt. Auf diese Weise können die tatsächlichen Zielsignale von Rauschen und/oder Geistersignalen unterschieden werden. So können die Zellen der Entfernung-Doppler-Matrix ermittelt werden, welche Zielsignale enthalten.

Für wenigstens einen Ziel-Spektrumswert aus der Kombination aller Empfänger wird eine Differenz der komplexwertigen Amplituden der zu diesem Ziel-Spektrumswert gehörenden Zellen mit dem kleinsten Dopplerwert und dem drittkleinsten Dopplerwert gebildet, der Betrag dieser Differenz quadriert und einem erster Vergleichswert zugewiesen. Ferner wird eine Differenz der komplexwertigen Amplituden der zu diesem Ziel-Spektrumswert gehörenden Zellen mit dem zweitkleinsten Dopplerwert und dem größten Dopplerwert gebildet, der Betrag dieser Differenz quadriert und einem erster Vergleichswert zugewiesen wird. Die Vergleichswerte werden verglichen. Die Signale, welche zu den Zellen gehören, aus deren komplexwertigen Amplituden der kleinere der beiden Vergleichswerte gebildet ist, werden als die zwei Zielsignale für dasselbe Zielobjekt, die von dem wenigstens einen zweiten Sendesignal herrühren, validiert. Mithilfe des Vergleichs des dritten und des vierten Vergleichswerts können die Zellen, welche tatsächliche Zielsignale enthalten, effizienter und schneller identifiziert werden.

Es werden das wenigstens eine erste Sendesignal, das wenigstens eine zweite Sendesignal und das wenigstens eine dritte Sendesignal nicht permanent simultan ausgesendet. Bei dem wenigstens einen zweiten Sendesignal werden regelmäßige Sendepausen mit vorgegebener Länge eingelegt. Außerdem werden das wenigstens eine erste Sendesignal, das wenigstens eine zweite Sendesignal und das wenigstens eine dritte Sendesignal in unterschiedlichen Phasenlagen ausgesendet. Insgesamt werden so Mehrdeutigkeiten bei den Ergebnissen der wenigstens einen diskreten Fourier-Transformation verringert. Die Zielsignale wenigstens eines Zielobjekts können so einfacher den Sendesignalen zugeordnet und validiert werden. Insgesamt kann so die Genauigkeit bei der Ermittlung der Objektinformationen verbessert werden.

Der wenigstens eine erste Sender, der wenigstens eine zweite Sender und der wenigstens eine dritte Sender sind gleichzeitig aktiv. Auf diese Weise kann die Ermittlung der Objektinformationen beschleunigt werden.

Die reflektierten Echos werden auf der Empfängerseite als Empfangssignale empfangen und sofern erforderlich in eine für eine elektronische Steuer- und/oder Auswerteeinrichtung verwertbare Form gebracht. Sofern die Sendesignale und die resultierenden Echos eine Signalart aufweisen, welche nicht direkt mit der entsprechenden elektronischen Steuer- und/oder Auswerteeinrichtung verarbeitet werden kann, werden die Empfangssignale in eine elektronisch verwertbare Form gebracht. Andernfalls ist keine entsprechende Anpassung, insbesondere Umwandlung, der Empfangssignale erforderlich. Auf diese Weise können die Empfangssignale mittels der elektronischen Steuer- und/oder Auswerteeinrichtung direkt oder gegebenenfalls nach entsprechender Anpassung verarbeitet werden.

Das Verfahren kann vorteilhafterweise mit wenigstens einem Mittel auf softwaremäßigem und/oder hardwaremäßigem Wege realisiert sein. Das Verfahren kann softwaremäßig und/oder hardwaremäßig in Kombination mit der Steuer- und/oder Auswerteeinrichtung realisiert sein. Die Mittel zum Ausführen des Verfahrens können in einer ohnehin benötigten Steuer- und/oder Auswerteeinrichtung des Radarsystems enthalten sein.

Vorteilhafterweise kann das Radarsystem eine schnelle Frequenzmodulation zur Realisierung der Sendesignale nutzen. Dabei werden hintereinander mehrere sogenannte Chirps mit entsprechenden Frequenzrampen als Chirp-Sequenzen ausgesendet.

Das wenigstens eine zweite Sendesignal und das wenigstens eine dritte Sendesignal werden mittels Phasenmodulationen gegeneinander und gegenüber dem wenigstens einen ersten Sendesignal so codiert, dass eine zumindest temporäre signaltechnische Orthogonalität zwischen den Sendesignalen erzielt wird. Auf diese Weise kann eine Unterscheidung der Sendesignale auf der Empfängerseite vereinfacht werden.

Am Ausgang der Fourier-Transformation sind die Zielsignale, welche von den einzelnen Sendesignalen herrühren, in Abhängigkeit der von Chirp zu Chirp hinzugefügten Phasendifferenz in der Dopplerdimension verschoben. Mithilfe des erfindungsgemäßen Verfahrens können die einzelnen Signalkomponenten einfacher dem wenigstens einen ersten Sendesignal, dem wenigstens einen zweiten Sendesignal und dem wenigstens einen dritten Sendesignal zugeordnet und die Phasenlage der einzelnen Ausbreitungspfade unabhängig voneinander bestimmt werden.

Bei dem Radarsystem kann es sich um ein sogenanntes MiMo-Radar handeln, das mehrere Sende- und Empfangsantennen besitzt. Dabei können die Sendeantennen simultan aktiv sein und die Sendesignale geeignet, insbesondere orthogonal, codiert sein, sodass der oder die Empfänger die Ausbreitungspfade zu allen aktiven Sendern unabhängig voneinander zurückverfolgen können. Dadurch wird es möglich, mithilfe der sich dadurch ergebenden Phasenbeziehungen aller Sender- und Empfängerkombinationen eine Azimut-Winkelmessung besonders genau durchzuführen oder auch Azimut und Elevation gleichzeitig phasenbasiert zu messen.

Durch die erfindungsgemäße Verwendung von drei Sendern, die gleichzeitig genutzt werden, ist das erfindungsgemäße Radarsystem besonders leistungsfähig. Dabei auftretende Mehrdeutigkeiten können durch die erfindungsgemäßen Verfahrensschritte anhand der Antennengeometrie, insbesondere der räumlichen Sender- und Empfängeranordnung, gelöst werden.

Bei einer vorteilhaften Ausgestaltung des Verfahrens können der wenigstens eine dritte Sender und der wenigstens eine zweite Sender entlang einer gedachten Sendergerade angeordnet werden, wobei die Sendergerade quer zu den Hauptsenderichtungen der Sender verlaufen kann. Auf diese Weise wird eine definierte Anordnung der Sender erreicht.

Vorteilhafterweise kann die gedachte Sendergerade bei der normalen Orientierung des Radarsystems räumlich horizontal verlaufen. Auf diese Weise kann durch die entsprechende Anordnung der Sender eine Azimut-Winkelbestimmung für das wenigstens eine Zielobjekt ermöglicht werden.

Bei einer weiteren vorteilhaften Ausgestaltung des Verfahrens kann der wenigstens eine dritte Sender in einem ersten Abstand zu dem wenigstens einen zweiten Sender angeordnet werden, wobei der erste Abstand als ganzzahliges Vielfaches, insbesondere dreifaches, der halben Wellenlänge des wenigstens einen ersten Sendesignals vorgegeben werden kann. Auf diese Weise kann bei einer Erzeugung eines virtuellen Arrays auf Basis der speziellen räumlichen Anordnung der Sender insbesondere mithilfe einer geometrischen Faltung oder Projektion ein doppeltbelegtes virtuelles Element erzeugt werden. Informationen aus dem doppelbelegten virtuellen Element können zur Auflösung von Mehrdeutigkeiten bei den Empfangssignalen verwendet werden.

Bei einer weiteren vorteilhaften Ausgestaltung des Verfahrens kann der wenigstens eine erste Sender auf der gedachten Sendergeraden angeordnet werden. Auf diese Weise kann die Genauigkeit einer Azimutwinkel-Bestimmung verbessert werden. Alternativ kann der wenigstens eine erste Sender neben der gedachten Sendergeraden angeordnet werden. Auf diese Weise kann zusätzlich eine Elevation für das wenigstens eine Zielobjekt bestimmt werden.

Bei einer weiteren vorteilhaften Ausgestaltung des Verfahrens können der wenigstens eine erste Sender und der wenigstens eine zweite Sender in Projektion auf die Sendergerade betrachtet in unterschiedlichen Abständen zu dem wenigstens einen dritten Sender angeordnet werden. Auf diese Weise können etwaige Mehrdeutigkeiten bei den Empfangssignalen noch besser aufgelöst werden.

Bei einer weiteren vorteilhaften Ausgestaltung des Verfahrens können die wenigstens zwei Empfänger auf einer gedachten Empfängergeraden angeordnet werden, wobei die Empfängergerade quer zu den Hauptempfangsrichtungen der Empfänger verlaufen kann und wobei die benachbarten Empfänger jeweils in einem dritten Abstand zueinander angeordnet werden können, welcher der halben Wellenlänge des wenigstens einen ersten Sendesignals entsprechen kann. Auf diese Weise kann bei einer Erzeugung eines virtuellen Arrays auf Basis der speziellen räumlichen Anordnung der Empfänger ein doppeltbelegtes virtuelles Element ermöglicht werden. Informationen aus dem doppelt belegten virtuellen Element können zur Auflösung von Mehrdeutigkeiten bei den Empfangssignalen verwendet werden.

Bei einer weiteren vorteilhaften Ausführungsform kann auf der Empfängerseite aus dem Ergebnis der wenigstens einen mehrdimensionalen diskreten Fourier-Transformation für alle Empfänger kombiniert und jeden Empfänger einzeln jeweils eine Mehrzahl von Zielsignalen ermittelt werden. Dabei kann pro physikalisch vorhandenem Zielobjekt eines der Zielsignale dem wenigstens einen ersten Sendesignal entsprechen, zwei Zielsignale können dem wenigstens einen zweiten Sendesignal entsprechen und eines der Zielsignale kann dem wenigstens einen dritten Sendesignal entsprechen. Da sich die Intensität des wenigstens einen zweiten Sendesignals auf zwei Zielsignale aufteilt, sind - sofern die wenigstens drei Sendesignale mit gleichen Intensitäten ausgesendet werden - die Beträge der komplexwertigen Amplituden der Zielsignale aus dem wenigstens einen zweiten Sendesignal kleiner als die Beträge der komplexwertigen Amplitude des Zielsignals aus dem ersten Sendesignal und des Zielsignals aus dem dritten Sendesignal. Auf diese Weise können die beiden Zielsignale aus dem wenigstens einen zweiten Sendesignal von dem Zielsignal aus dem wenigstens einen ersten Sendesignal und dem Zielsignal aus dem wenigstens einen dritten Sendesignal unterschieden werden.

Vorteilhafterweise kann die Anzahl der Teilmatrizen aus dem Quotienten der Anzahl der Dopplertore des Eindeutigkeitsbereichs und dem kleinsten Doppler-Abstand von aus dem wenigstens einen ersten Sendesignal, dem wenigstens einen zweiten Sendesignal und dem wenigstens einen dritten Sendesignal herrührenden Zielsignalen ein und desselben Zielobjekts berechnet werden. Bei einem Eindeutigkeitsbereich von insbesondere 128 Dopplertoren und einem kleinsten Dopplerabstand von insbesondere 32 Dopplertoren kann die Entfernung-Doppler-Matrix in vier Teilmatrizen jeweils mit der Ausdehnung von 32 Dopplertoren unterteilt werden. Der Eindeutigkeitsbereich kann auch mehr oder weniger als 128 Dopplertore umfassen. Die kleinsten Dopplerabstände zwischen den Zielsignalen können durch entsprechende Wahl der Phasenmodulation und/oder der Sendepausen auf der Senderseite vorgegeben werden.

Vorteilhafterweise können zur Ermittlung der Spektrumswerte die Beträge der komplexwertigen Amplituden der jeweiligen Zellen addiert und das Ergebnis quadriert werden. Alternativ können die Beträge der komplexwertigen Amplituden quadriert (Betragsquadrate) und die Betragsquadrate der komplexwertigen Amplituden addiert werden. Auf diese Weise kann durch die Kombination der entsprechenden Zellen der Teilmatrizen eine Gesamtamplitude der einander entsprechenden Zellen mit gleichem Entfernungswert ermittelt werden.

Bei einer weiteren vorteilhaften Ausgestaltung des Verfahrens kann ausgehend von einer vorgegebenen räumlichen Anordnung der Sender und der Empfänger eine geometrische Faltung oder geometrische Projektion durchgeführt werden und daraus ein virtuelles Array erzeugt werden und dasjenige Element des virtuellen Arrays als doppelbelegtes virtuelles Element identifiziert werden, auf das sowohl wenigstens ein Empfangssignal des wenigstens einen zweiten Sendesignals, welches von wenigstens einem der Empfänger empfangen wird, als auch wenigstens ein Empfangssignal eines der beiden anderen jeweils wenigstens einen Sendesignale, welches von wenigstens einem anderen der Empfänger empfangen wird, fällt.

Es kann eine Differenz der Phase einer der komplexwertigen Amplituden desjenigen Empfängers verwendet werden, von dem das zweite Sendesignal des zweiten Senders zur Bildung des doppelbelegten virtuellen Element nicht verwendet wird, wobei diese komplexwertige Amplitude rangmäßig einer der beiden Amplituden bei der kombinierten Betrachtung der Empfänger entspricht, aus denen der größere der ersten beiden Vergleichswerte gebildet ist, und der Phase einer oder dem Mittelwert beider komplexwertigen Amplituden desjenigen/derjenigen Empfänger(s) empfangen wird/werden, der zu dem doppelbelegten virtuellen Element führt, an dem der zweite Sender beteiligt ist, gebildet werden. Der Betrag dieser Differenz kann einem dritten Vergleichswert zugewiesen werden.

Es kann eine Differenz der Phase der anderen der komplexwertigen Amplituden desjenigen Empfängers verwendet werden, von dem das zweite Sendesignal des zweiten Senders zur Bildung des doppelbelegten virtuellen Element nicht verwendet wird, wobei diese andere komplexwertige Amplitude rangmäßig der anderen der beiden Amplituden bei der kombinierten Betrachtung der Empfänger entspricht, aus denen der größere der ersten beiden Vergleichswerte gebildet ist, und der Phase einer oder dem Mittelwert beider komplexwertigen Amplituden desjenigen Empfängers verwendet wird/werden, der zu dem doppelbelegten virtuellen Element führt, an dem der zweite Sender beteiligt ist, gebildet werden. Der Betrag dieser Differenz kann einem vierten Vergleichswert zugewiesen werden.

Der dritte Vergleichswert und der vierte Vergleichswert können verglichen werden. Das Signal, welches zu den Zellen gehören, aus deren Amplituden der kleinere der beiden Vergleichswerte gebildet ist, kann als das Zielsignal für dasselbe Zielobjekt, das von dem wenigstens einen dritten Sendesignal herrührt, validiert werden. Das Signal, welches zu den Zellen gehören, aus deren Amplituden der größere der beiden Vergleichswerte gebildet ist, kann als das Zielsignal für dasselbe Zielobjekt , das von dem wenigstens einen ersten Sendesignal herrührt, validiert werden.

Insgesamt kann durch die besondere räumliche Anordnung der Sender und der Empfänger erreicht werden, dass bei einer geometrischen Faltung oder geometrischen Projektion der Anordnung ein virtuelles Array erzeugt werden kann, bei dem sich genau ein doppelbelegtes virtuelles Element ergibt, auf welches zwei verschiedene einzelne virtuelle Elemente fallen. Das doppelbelegte virtuelle Element wird also von zwei unterschiedlichen Sendern und zwei unterschiedliche Empfängern belegt. Die einzelnen, an dem doppelbelegten virtuellen Element beteiligten virtuellen Elemente empfangen dabei dieselbe Signalphase, wodurch bei Kenntnis des einen beteiligten virtuelle Elements automatisch das andere beteiligte Element identifiziert werden kann. Diese Information kann zur Auflösung der aus der Signalform verbleibenden Mehrdeutigkeit genutzt werden.

Vorteilhafterweise kann aus wenigstens einem validierten Zielsignal wenigstens eine Objektinformation ermittelt werden. Dabei können sowohl das wenigstens eine erste Sendesignal als auch das wenigstens eine zweite Sendesignal und entsprechend die Zielsignale zur Ermittlung von Objektinformationen herangezogen werden. So können unterschiedliche Objektinformationen direkter ermittelt und etwaige Mehrdeutigkeiten zuverlässige gelöst werden.

Vorteilhafterweise kann aus wenigstens einem validierten Zielsignal wenigstens eine Objektinformation in Form einer Geschwindigkeit und/oder einer Position, insbesondere einem Abstand und/oder einer Richtung, des wenigstens einen Objektes relativ zu dem Radarsystem ermittelt werden. Auf diese Weise können mit dem Radarsystem Informationen über das wenigstens eine Objekt gewonnen werden, welche insbesondere zur Steuerung von Fahrfunktionen des Fahrzeugs interessant sind.

Die mit dem Radarsystem erfassbaren Zielobjekten können von stehenden oder bewegten Objekten, insbesondere anderen Fahrzeuge, Personen, Hindernisse, Fahrbahnunebenheiten, insbesondere Schlaglöcher oder Steine, Fahrbahnbegrenzungen oder dergleichen, herrühren. Mehrere Zielobjekte können von unterschiedliche Bereichen ein und desselben Objekts oder von unterschiedlichen Objekten herrühren.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, einem Luftfahrzeug und/oder einem Wasserfahrzeug verwendet werden. Die Erfindung kann auch bei autonomen oder wenigstens teilweise autonomen Fahrzeugen eingesetzt werden.

Das Radarsystem kann vorteilhafterweise mit einem Fahrerassistenzsystem des Fahrzeugs, insbesondere einem Parkassistenzsystem, einer Fahrwerksregelung und/oder einer Fahrer-Informationseinrichtung, verbunden oder Teil eines solchen sein. Auf diese Weise können die mit dem Radarsystem erfassten Objektinformationen, insbesondere Abstände, Richtungen und/oder Geschwindigkeiten eines Objektes relativ zum Fahrzeug, an eine Steuerung des Fahrerassistenzsystems übermittelt und zur Beeinflussung von Fahrfunktionen, insbesondere der Geschwindigkeit, einer Bremsfunktion, einer Lenkungsfunktion und/oder einer Ausgabe eines Hinweis- und/oder Warnsignals insbesondere für den Fahrer, verwendet werden.

Vorteilhafterweise können die Ziel-Spektrumswerte mittels wenigstens einem Detektionsalgorithmus aus den Spektrumswerten ermittelt werden. Auf diese Weise können Signale, welche zu Ziel-Spektrumswerten gehören, von Signalen, welche von Rauschen oder Geistersignalen herrühren, unterschieden werden. Vorteilhafterweise kann als Detektionsalgorithmus ein Algorithmus zur Ermittlung einer konstanten Falschalarmrate (CFAR) eingesetzt werden.

Bei einer weiteren vorteilhaften Ausführungsform kann die Länge der Sendepausen des wenigstens einen zweiten Sendesignals als Chirpdauer oder einem ganzzahligen Vielfachen der Chirpdauer des wenigstens einen ersten Sendesignals vorgegeben werden. Auf diese Weise kann das wenigstens eine zweite Sendesignal auf der Empfängerseite mithilfe der Fourier-Transformation in zwei Zielsignale aufgeteilt werden. Der Abstand dieser beiden Zielsignale in der Dopplerdimension kann der Hälfte der Anzahl der Dopplertore im Eindeutigkeitsbereich entsprechen.

Vorteilhafterweise können das wenigstens eine erste Sendesignal, das wenigstens eine zweite Sendesignal und das wenigstens eine dritte Sendesignal jeweils als Chirp gleicher Zeitdauer ausgesendet werden. Das wenigstens eine zweite Sendesignal kann bei jedem zweiten Chirp für die Dauer eines Chirps pausieren.

Bei einer weiteren vorteilhaften Ausgestaltung des Verfahrens kann eine Phasendifferenz zwischen wenigstens zwei validierten Zielsignalen ermittelt werden und/oder ein digitaler Beamforming Algorithmus durchgeführt werden. Aus der Phasendifferenz und/oder dem digitalen Beamforming Algorithmus kann ein Einfallswinkel oder Richtungswinkel als eine Objektinformation bestimmt werden. So kann die Richtung des erfassten Zielobjekts relativ zu dem Radarsystem bestimmt werden.

Vorteilhafterweise kann im Zuge der Ermittlung wenigstens einer Objektinformation wenigstens eine mehrdimensionale diskrete Fourier-Transformation als schnelle Fourier-Transformation ausgeführt werden. Auf diese Weise kann die wenigstens eine Fourier-Transformation schneller berechnet werden.

Vorteilhafterweise kann eine einzige mehrdimensionale, insbesondere zweidimensionale, dreidimensionale, vierdimensionale oder dergleichen, diskrete Fourier-Transformation ausgeführt werden. Auf diese Weise können mit nur einer einzigen insbesondere schnellen Fourier-Transformation Informationen sowohl aus dem wenigstens einen ersten Sendesignal, aus dem wenigstens einen zweiten Sendesignal und dem wenigstens einen dritten Sendesignal verwertet werden. So kann das Verfahren effizienter ausgeführt werden.

Vorteilhafterweise kann bei mehr als zwei Empfängern eine höherdimensionale, insbesondere dreidimensionale Fourier-Transformation, durchgeführt werden.

Vorteilhafterweise können das wenigstens eine zweite Sendesignal und das wenigstens eine dritte Sendesignal auf der Senderseite mittels einer jeweiligen binären Phasenumtastung codiert werden. Auf diese Weise kann eine signaltechnische Orthogonalität zwischen den Sendesignalen erzielt werden. Die binäre Phasenumtastung ist ein an sich bekanntes digitales Modulationsverfahren und wird in Fachkreisen auch als "Binary Phase-Shift Keying" (BPSK) bezeichnet.

Vorteilhafterweise kann die Codierung wenigstens eines Sendesignals im Takt der Frequenzrampen der Chirp-Sequenzen erfolgen. Auf diese Weise können die aufeinander folgenden linearen Frequenzrampen wahlweise mit unterschiedlichen Phasenlagen, insbesondere 0° oder 180°, ausgesendet werden. So können die Phasen derart umgetastet werden, dass die Sendesignale bei den Sendern über die gesamte Sequenzdauer betrachtet orthogonal sind.

Vorteilhafterweise kann wenigstens ein Sendesignal mit einem regelmäßig alternierenden Muster belegt werden. Auf diese Weise kann das wenigstens eine Sendesignal, insbesondere wenigstens ein zweites Sendesignal und/oder wenigstens ein drittes Sendesignal, von wenigstens einem anderen Sendesignal, insbesondere wenigstens einem ersten Sendesignal, unterschieden und auf der Empfängerseite einfacher getrennt werden. Vorteilhafterweise kann wenigstens ein Sendesignal in Form von Chirps ausgesendet werden.

Vorteilhafterweise kann wenigstens ein Sendesignal mit konstanter Phase und/oder wenigstens ein Sendesignal mit wechselnder Phase ausgesendet werden. Auf diese Weise können die Sendesignale besser voneinander unterschieden werden.

Vorteilhafterweise kann wenigstens ein erstes Sendesignal mit konstanter Phase ausgesendet werden. Wenigstens ein zweites Sendesignal und wenigstens ein drittes Sendesignal können jeweils mit wechselnder Phase ausgesendet werden. Alternativ kann wenigstens ein erstes Sendesignal mit wechselnder Phase und wenigstens ein zweites/drittes Sendesignal mit konstanter Phase ausgesendet werden.

Das Sendesignal, welches mit konstanter Phase ausgesendet wird, kann nach entsprechender Auswertung auf der Empfängerseite als Referenz bezüglich wenigstens einer Objektinformation dienen, ohne dass eine Korrektur der Phasenverschiebung erforderlich ist. So kann insbesondere aus diesem Sendesignal direkt eine Relativgeschwindigkeit zwischen dem erfassten Zielobjekt und dem Radarsystem ermittelt werden.

Bei einer weiteren vorteilhaften Ausführungsform kann wenigstens ein Sendesignal nach jeder Frequenzrampe des frequenzmodulierten Dauerstrichsignals mit einem Phasenwechsel zwischen 0° und 180° belegt werden. Auf diese Weise kann das wenigstens eine Sendesignal einfach mit einem regelmäßig alternierenden Muster belegt werden. Alternativ kann wenigstens ein Sendesignal nach jeder Frequenzrampe und einer anschließenden Signalpause mit einem Phasenwechsel zwischen 0° und 180° belegt werden. Auf diese Weise kann eine Mehrdeutigkeit vermieden werden.

Vorteilhafterweise kann das Verfahren mehrmals hintereinander, insbesondere zyklisch, durchgeführt werden. Auf diese Weise kann der Überwachungsbereich über einen längeren Zeitraum überwacht werden. Zusätzlich oder alternativ können die Ergebnisse der einzelnen Messzyklen miteinander verglichen werden und somit eine Validierung der Zielsignale verbessert und Mehrdeutigkeiten besser aufgelöst werden.

Vorteilhafterweise kann wenigstens ein Zielsignal über mehrere Messzyklen validiert werden. Ein derartiges Verfahren kann als "Tracking" bezeichnet werden. Durch Beobachtung von Änderungen mindestens einer Objektinformation, insbesondere eines Abstands des Zielobjekts, über mehrere Messzyklen kann ermittelt werden, welche von mehreren anderen Objektinformationen, insbesondere Geschwindigkeiten, die aus ermittelten Zielsignalen bestimmt werden können, korrekt sind. Dabei kann zusätzlich die Kenntnis darüber genutzt werden, dass von zwei Objektinformationen, insbesondere zwei unterschiedlichen Geschwindigkeiten, die für ein Zielsignal ermittelt werden, nur eine Objektinformation, also eine Geschwindigkeit, korrekt sein kann. Insgesamt können so Mehrdeutigkeiten in Bezug auf Zielsignale und darin enthaltenen Objektinformationen zuverlässiger aufgelöst werden.

Ferner wird die technische Aufgabe erfindungsgemäß bei dem Radarsystem dadurch gelöst, dass die wenigstens einen Steuer- und/oder Auswerteeinheit Mittel aufweist zur Durchführung des erfindungsgemäßen Verfahrens.

Vorteilhafterweise können die Mittel zur Durchführung des erfindungsgemäßen Verfahrens auf softwaremäßigem und/oder hardwaremäßigem Wege realisiert sein.

Bei einer vorteilhaften Ausführungsform können zwei der Sender in einem Abstand zueinander angeordnet sein, welche einem ganzzahligen vielfachen, insbesondere dem dreifachen, der halben Wellenlänge eines der Sendesignale entspricht. Auf diese Weise kann bei der Erzeugung eines virtuellen Arrays auf Basis der speziellen räumlichen Anordnung der Sender ein doppeltbelegtes virtuelles Element ermöglicht werden. Informationen aus dem doppelt belegten virtuellen Element können zur Auflösung von Mehrdeutigkeiten bei den Empfangssignalen verwendet werden.

Außerdem wird die technische Aufgabe erfindungsgemäß bei dem Fahrerassistenzsystem dadurch gelöst, dass die wenigstens eine Steuer- und/oder Auswerteeinheit Mittel aufweist zur Durchführung des erfindungsgemäßen Verfahrens.

Im Übrigen gelten die im Zusammenhang mit dem erfindungsgemäßen Verfahren, dem erfindungsgemäßen Radarsystem und dem erfindungsgemäßen Fahrassistenzsystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

**Kurze Beschreibung der Zeichnungen**

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch

Figur 1 ein Kraftfahrzeug mit einem Fahrerassistenzsystem und einem Radarsystem zu Überwachung eines Überwachungsbereichs in Fahrtrichtung vor dem Kraftfahrzeug;

Figur 2 eine Funktionsdarstellung des Kraftfahrzeugs mit dem Fahrerassistenzsystem und dem Radarsystem aus der Figur 1;

Figur 3 eine Vorderansicht der Sender und Empfänger des Radarsystems aus den Figuren 1 und 2 gemäß einem ersten Ausführungsbeispiel;

Figur 4 ein virtuelles Array, welches aus der Anordnung der Sender und Empfänger des Radarsystems aus der Figur 3 mit einer geometrischen Faltung hervorgeht;

Figur 5 ein Frequenz-Zeit-Diagramm eines ersten Sendesignals eines ersten Senders des Radarsystems aus den Figuren 1 bis 3;

Figur 6 ein Frequenz-Zeit-Diagramm eines zweiten Sendesignals eines zweiten Senders des Radarsystems aus den Figuren 1 bis 3;

Figur 7 ein Frequenz-Zeit-Diagramm eines dritten Sendesignals eines dritten Senders des Radarsystems aus den Figuren 1 bis 3;

Figur 8 ein Entfernungs-Doppler-Diagramm mit Zielsignalen, welche aus Empfangssignalen des ersten Sendesignals, des zweiten Sendesignals und des dritten Sendesignals aus den Figuren 5 bis 7 gewonnen werden, die an drei Zielobjekten reflektiert wurden;

Figur 9 ein Amplitudenbetrags-Doppler-Diagramm der zweiten Zielsignale aus der Figur 8, welche sich im gleichen Entfernungstor befinden;

Figur 10 eine Spektrumsmatrix, welche aus den Amplituden der Zellen entsprechend dem Entfernungs-Doppler-Diagramm aus der Figur 8 gewonnen werden kann;

Figur 11 Berechnungen von beispielhaft vier Spektrumswerten der Spektrumsmatrix aus der Figur 10;

Figur 12 die Spektrumsmatrix aus der Figur 10, welche beispielhaft die Spektrumswerte aus den Berechnungen aus der Figur 11 enthält;

Figur 13 eine Vorderansicht der Sender und Empfänger eines Radarsystems gemäß einem zweiten Ausführungsbeispiel, welches zu dem Radarsystem aus den Figuren 1 und 2 ähnlich ist;

Figur 14 ein virtuelles Array, welches aus den Sendern und Empfängern des Radarsystems aus der Figur 13 nach einer geometrischen Faltung hervorgeht.

In den Figuren sind gleiche Bauteile mit gleichen Bezugszeichen versehen.

## Ausführungsform(en) der Erfindung

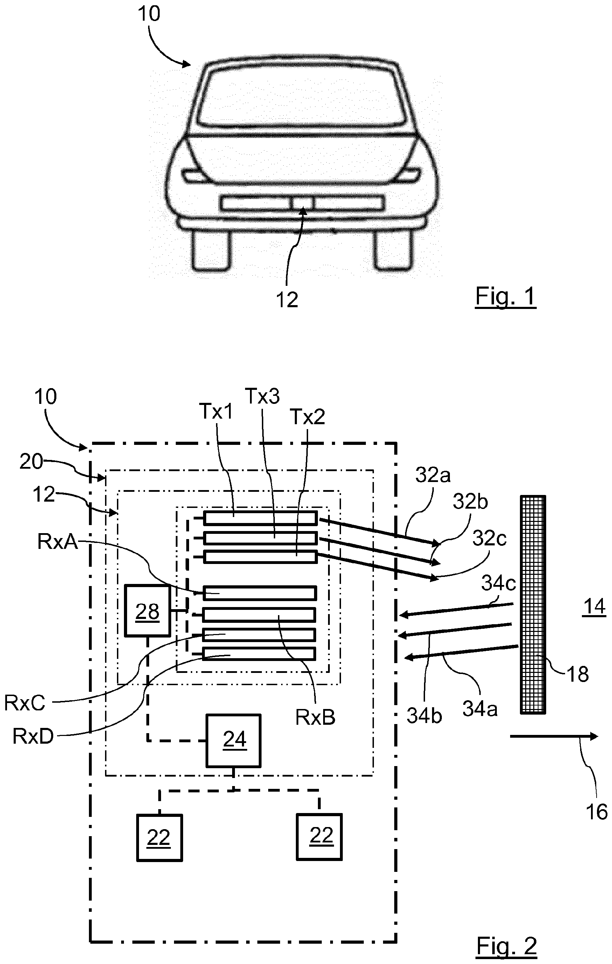

In der Figur 1 ist ein Kraftfahrzeug 10 in Form eines Personenkraftwagens in der Vorderansicht gezeigt. Das Kraftfahrzeug 10 verfügt über ein Radarsystem 12. Das Radarsystem 12 ist beispielhaft in der vorderen Stoßstange des Kraftfahrzeugs 10 angeordnet. Alle Komponenten des Radarsystems 12, beispielsweise mehrere Sender und Empfänger, können beispielhaft in einem einzigen Radarsensor kombiniert enthalten sein. Mit dem Radarsystem 12 kann ein in der Figur 2 angedeuteter Überwachungsbereich 14 in Fahrtrichtung 16 vor dem Kraftfahrzeug 10 auf Objekte 18 hin überwacht werden. Das Radarsystem 12 kann auch an anderer Stelle am Kraftfahrzeug 10 angeordnet und anders ausgerichtet sein. Bei den Objekten 18 kann es sich beispielsweise um andere Fahrzeuge, Personen, Hindernisse, Fahrbahnunebenheiten, beispielsweise Schlaglöcher oder Steine, Fahrbahnbegrenzungen oder dergleichen handeln. In der Figur 2 ist ein Objekt 18 beispielhaft als kariertes Rechteck angedeutet. Die Figur 2 ist ansonsten lediglich ein Funktionsschaubild einiger Bauteile des Kraftfahrzeugs 10 und des Radarsystems 12, das nicht der räumlichen Orientierung dient.

Das Radarsystem 12 ist als frequenzmoduliertes Dauerstrichradar ausgestaltet. Frequenzmodulierte Dauerstrichradare werden in Fachkreisen auch als FMCW (Frequency modulated continuous wave) Radare bezeichnet. Mit dem Radarsystem 12 kann beispielsweise eine Entfernung, eine Richtung und eine Geschwindigkeit des Objektes 18 relativ zum Kraftfahrzeug 10 ermittelt werden.

Das Radarsystem 12 ist Teil eines Fahrerassistenzsystems 20 oder kann zumindest mit diesem verbunden sein. Mit dem Fahrerassistenzsystem 20 kann beispielsweise ein Fahrer des Kraftfahrzeugs 10 unterstützt werden. Beispielsweise kann das Kraftfahrzeug 10 mithilfe des Fahrerassistenzsystems 20 wenigstens teilweise autonom fahren, ein- oder ausparken. Mit dem Fahrerassistenzsystem 20 können Fahrfunktionen des Kraftfahrzeugs 10, beispielsweise eine Motorsteuerung, eine Bremsfunktion oder eine Lenkfunktion, beeinflusst oder Hinweise oder Warnsignale ausgegeben werden. Hierzu ist das Fahrerassistenzsystem 20 mit Funktionseinrichtungen 22 regelnd und/oder steuernd verbunden. In der Figur 2 sind beispielhaft zwei Funktionseinrichtungen 22 dargestellt. Bei den Funktionseinrichtungen 22 kann es sich beispielsweise um ein Motorsteuerungssystem, ein Bremssystem, ein Lenksystem, eine Fahrwerksteuerung oder ein Signalausgabesystem handeln.

Das Fahrerassistenzsystem 20 weist eine elektronische Steuereinrichtung 24 auf, mit der entsprechende elektronische Steuer- und Regelsignale an die Funktionseinrichtungen 22 übermittelt und/oder von diesen empfangen und verarbeitet werden können.

Das Radarsystem 12 umfasst beispielhaft einen ersten Sender Tx1, einen zweiten Sender Tx2, einen dritten Sender Tx3, eine elektronische Steuer- und Auswerteeinrichtung 28 und vier Empfänger RxA, RxB, RxC und RxD. Die Sender Tx1, Tx2 und Tx3 sind beispielhaft mit einem Radarsensor realisiert, der beispielsweise einen Chip mit den drei integrierten Sendern Tx1, Tx2 und Tx3 enthält. Die Sender Tx1, Tx2 und Tx3 sind jeweils mit einer separaten Sendeantenne verbunden.

Die räumliche Geometrie der Antennenanordnung der drei Sender Tx1, Tx2, und Tx3 und der vier Empfänger RxA, RxB, RxC und RxD ist so ausgelegt, dass sich, wie weiter unten näher erläutert, zwei virtuelle Elemente 2A und 3D eines virtuellen Arrays 36 an derselben Position befinden, welche im Folgenden als "doppelbelegtes virtuelles Element 2A/3D" bezeichnet wird. Das virtuelle Array 36 wird in hier nicht weiter interessierender Weise beispielsweise mittels einer geometrischen Faltung oder geometrischen Projektion aus der räumlichen Geometrie der Antennenanordnung gebildet.

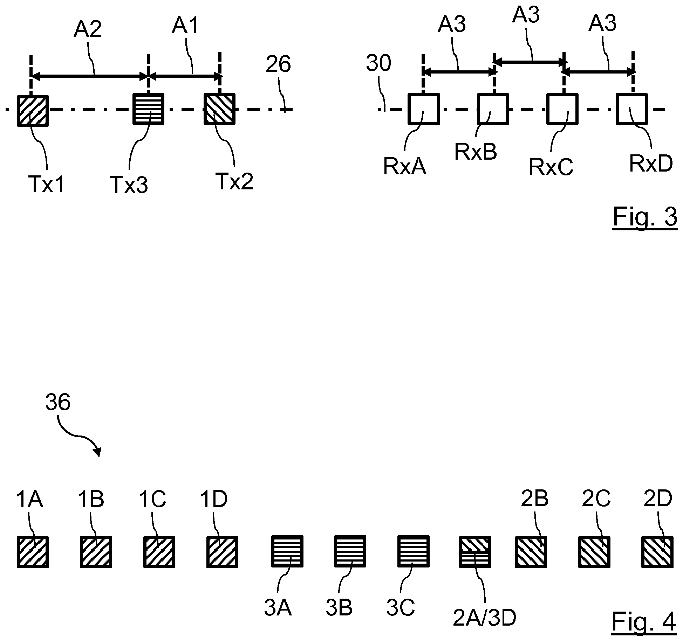

Die drei Sender Tx1, Tx2, und Tx3, respektive deren Sendeantennen, sind, wie in der Figur 3 gezeigt, entlang einer gedachten Sendergeraden 26 angeordnet. Die Figur 3 zeigt die Sender Tx1, Tx2, und Tx3 mit Blickrichtung auf die Abstrahlseite ihrer Sendeantennen. Die Sendergerade 26 verläuft quer, beispielhaft senkrecht, zu den Hauptsenderrichtungen der Sender Tx1, Tx2, und Tx3. Die Hauptsenderichtungen zeigen in der Figur 3 senkrecht von der Zeichenebene weg. In der normalen Betriebsposition des Radarsystems 12, in der beispielsweise das Fahrzeug auf einer horizontalen Fahrbahn steht oder fährt, verläuft die Sendergerade 26 räumlich horizontal.

Der dritte Sender Tx3 befindet sich beispielhaft räumlich zwischen dem ersten Sender Tx1 und dem zweiten Sender Tx2. Der dritte Sender Tx3 ist in einem ersten Abstand A1 zu dem zweiten Sender Tx2 angeordnet. Der erste Abstand A1 ist das Dreifache der halben Wellenlänge eines ersten Sendesignals 32a, welches mit dem ersten Sender Tx1 ausgesendet wird. Der erste Sender Tx1 in einem zweiten Abstand A2 zu dem dritten Sender Tx3 angeordnet. Der zweite Abstand A2 ist unterschiedlich ist zu dem ersten Abstand A1. Der zweite Abstand A2 ist beispielhaft das Vierfache der halben Wellenlänge des ersten Sendesignals 32a. Die Abstände A1 und A2 sind also jeweils ein ganzzahliges Vielfaches der halben Wellenlänge des ersten Sendesignals 32a.

Die beispielhaft vier Empfänger RxA, RxB, RxC und RxD, respektive deren Empfangsantennen, sind, wie ebenfalls in der Figur 3 gezeigt, nebeneinander entlang einer gedachten Empfangsgeraden 30 angeordnet. Die Figur 3 zeigt die Empfänger RxA, RxB, RxC und RxD mit Blickrichtung auf die Empfangsseite ihrer Empfangsantennen. Die Empfangsgerade 30 verläuft quer, beispielhaft senkrecht, zu den Hauptempfangsrichtungen der Empfänger RxA, RxB, RxC und RxD. Die Hauptsenderichtungen zeigen in der Figur 3 senkrecht in die Zeichenebene hinein. In der normalen Betriebsposition des Radarsystems 12, in der beispielsweise das Fahrzeug auf einer horizontalen Fahrbahn fährt oder steht, verläuft die Empfangs gerade 30 räumlich horizontal.

Einander benachbarte Empfänger RxA, RxB, RxC und RxD sind jeweils in einem Abstand A3 zueinander angeordnet. Der dritte Abstand A3 entspricht beispielhaft der halben Wellenlänge des ersten Sendesignals 32a.

Beispielhaft können die Sendergerade 26 und die Empfangsgerade 30, wie in der Figur 3 gezeigt, axial verlaufen. Der erste Sender Tx1 kann sich dabei auf der den Empfängern RxA, RxB, RxC und RxD abgewandten Seite befinden. Der Empfänger RxA kann sich auf der den Sendern Tx1, Tx2 und Tx3 zugewandten Seite und der Empfänger RxD kann sich auf der den Sendern Tx1, Tx2 und Tx3 abgewandten Seite befinden.

Ausgehend von der vorgegebenen räumlichen Anordnung der Sender Tx1, Tx2 und Tx3 und der Empfänger RxA, RxB, RxC und RxD wird eine geometrische Faltung oder geometrische Projektion durchgeführt und daraus ein virtuelles Array 36 erzeugt, welches in der Figur 4 gezeigt ist. Die Elemente des virtuellen Arrays 36 sind in der Figur 4 der besseren Übersichtlichkeit wegen jeweils mit einer Ziffer zwischen 1 und 3, welche die beteiligten Sender Tx1, Tx2 und Tx3 bezeichnet, und einem Buchstaben zwischen A und D, welcher die entsprechenden Empfänger RxA, RxB, RxC und RxD bezeichnet, gekennzeichnet. Insgesamt entstehen 11 virtuelle Elemente, welche mit 1 A bis 1D, 3A bis 3D und 2A bis 2D bezeichnet sind, wobei zwei der virtuellen Elemente, beispielhaft die virtuellen Elemente 2A und 3D, aufgrund der räumlichen Anordnung der Sender Tx1, Tx2 und Tx3 und der Empfänger RxA, RxB, RxC und RxD an derselben Position als das doppelbelegte virtuelle Element 2A/3D realisiert sind. Beispielhaft wird also dasjenige Element des virtuellen Arrays 36 als doppelbelegtes virtuelles Element 2A/3D identifiziert, auf das sowohl ein Empfangssignal 34b eines zweiten Sendesignals 32b des zweiten Senders Tx2, welches beispielhaft von Empfänger RxA empfangen wird, als auch beispielhaft ein Empfangssignal 34c eines dritten Sendesignals 32c des dritten Senders Tx3, welches beispielhaft von dem Empfänger RxD empfangen wird, mit identischer Phasenlage fällt.

Die Steuer- und Auswerteeinrichtung 28 ist signaltechnisch mit der Steuereinrichtung 24 verbunden. Mit der Steuereinrichtung 24 können abhängig von Objektinformationen des Radarsystems 12 Fahrfunktionen des Kraftfahrzeugs 10 gesteuert/geregelt werden. Für die Erfindung ist es nicht wesentlich, ob elektrische/elektronische Steuer- und/oder Auswertevorrichtungen, wie beispielsweise die Steuereinrichtung 24, die Steuer- und Auswerteeinrichtung 28, ein Motorsteuergerät des Kraftfahrzeugs 10 oder dergleichen, in einem oder mehreren Bauteilen oder Bauteilgruppen integriert oder wenigstens teilweise als dezentrale Bauteile oder Bauteilgruppen realisiert sind.

Die jeweiligen Senderantennen der Sender Tx1, Tx2 und Tx3 sind beispielhaft identisch aufgebaut. Mit den Sendern Tx1, Tx2 und Tx3 können jeweilige Sendesignale 32a, 32b und 32c jeweils mit sich ständig ändernder Frequenz in den Überwachungsbereich 14 gesendet werden. Die Sendesignale 32a, 32b und 32c werden an dem Objekt 18 reflektiert und als entsprechende Empfangssignale 34a, 34b und 34c zu den Empfängern RxA, RxB, RxC und RxD zurückgesendet und mit diesem empfangen. Aus den Empfangssignalen 34a, 34b und 34c wird nach einem weiter unten beschriebenen Verfahren mit der Steuer- und Auswerteeinrichtung 28 die Entfernung, die Richtung und die Geschwindigkeit des Objektes 18 relativ zum Kraftfahrzeug 10 ermittelt.

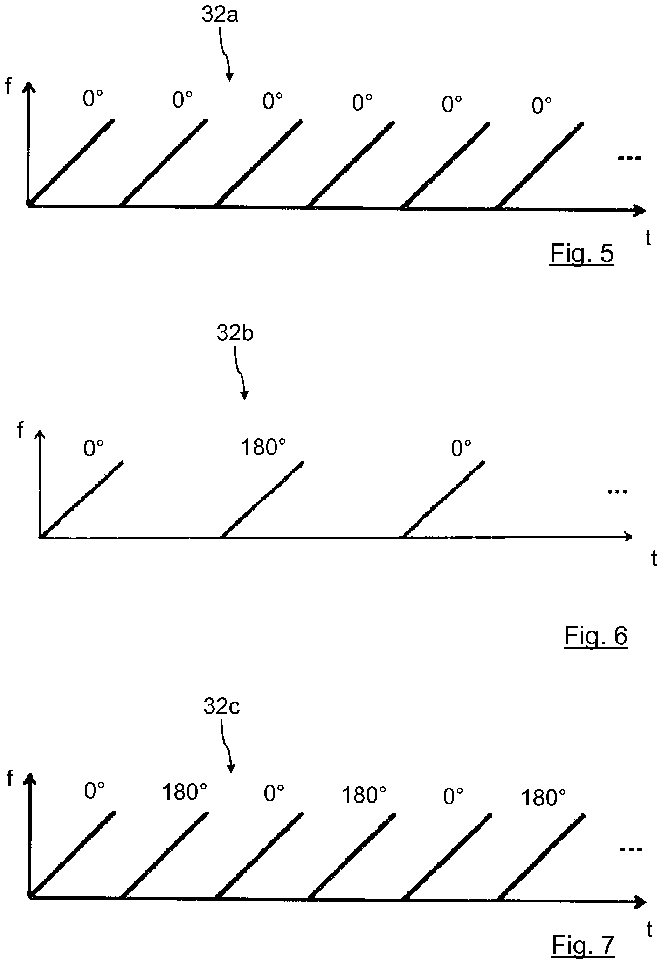

Das Verfahren zur Ermittlung von Objektinformationen von Objekten 18, die mit dem Radarsystem 12 erfasst werden, wird im Folgenden anhand der Figuren 5 bis 12 beispielhaft erläutert.

Bei dem Verfahren werden mit der Steuer- und Auswerteeinrichtung 28 die Sender Tx1, Tx2 und Tx3 so angesteuert, dass mit dem ersten Sender Tx1 das erste Sendesignal 32a, mit dem zweiten Sender Tx2 das zweite Sendesignal 32b und mit dem dritten Sender Tx3 das dritte Sendesignal 32c gleichzeitig in den Überwachungsbereich 14 gesendet werden. Die Sendesignale 32a, 32b und 32c werden aus beispielhaft demselben frequenzmodulierten Dauerstrichsignal erzeugt und bestehen aus mehreren nacheinander folgenden sogenannten Chirps. Das zweite Sendesignal 32b und das dritte Sendesignal 32c werden außerdem mittels Phasenmodulationen in Form einer binären Phasenumtastung gegeneinander und gegenüber dem ersten Sendesignal 32a so codiert, dass eine signaltechnische Orthogonalität zwischen den Sendesignalen 32a, 32b und 32c erzielt wird.

In der Figur 5 ist ein Frequenz-Zeit-Diagramm für das erste Sendesignal 32a gezeigt. Die Frequenz f ist auf der Ordinatenachse und die Zeit t auf der Abszissenachse aufgetragen. Die Chirps sind hier jeweils als Frequenzrampen gezeigt. Die aufeinander folgenden Chirps des ersten Sendesignals 32a haben jeweils die gleiche Phasenlage, sind also jeweils um 0° bezüglich ihrer Phase verschoben. Das erste Sendesignal 32a wird also mit konstanter Phase ausgesendet. Insgesamt werden beispielhaft bei einer Messung 128 solcher Chirps ausgesendet. Die Anzahl der Chirps gibt einen Eindeutigkeitsbereich an, der hier 128 beträgt.

In der Figur 6 ist ein mit der Figur 5 vergleichbares Frequenz-Zeit-Diagramm des zweiten Sendesignals 32b gezeigt. Das zweite Sendesignal 32b wird analog zum ersten Sendesignal 32a auf Basis von nacheinander folgenden Chirps, hier jedoch mit einer Sendepause nach jedem ausgesendeten Chirp, ausgesendet. Die Länge der Sendepause entspricht der Länge eines Chirps. Außerdem werden die aufeinander folgenden Chirps mit einem Phasenwechsel, nämlich zwischen 0° und 180°, und so mit einem regelmäßig alternierenden Muster realisiert.

In der Figur 7 ist ein mit den Figuren 5 und 6 vergleichbares Frequenz-Zeit-Diagramm des dritten Sendesignals 32c gezeigt. Das dritte Sendesignal 32c wird analog zum ersten Sendesignal 32a auf Basis von nacheinander folgenden Chirps ausgesendet. Dabei werden die aufeinander folgenden Chirps mit einem Phasenwechsel, nämlich zwischen 0° und 180°, und so mit einem regelmäßig alternierenden Muster realisiert.

Mit dem den Empfängern RxA, RxB, RxC und RxD werden die an dem Objekt 18 reflektierten Echos der Sendesignale 32a, 32b und 32c als Empfangssignale 34a, 34b und 34c empfangen und in eine mit der Steuer-/Auswerteeinrichtung 28 verwertbare Form gebracht.

Die Empfangssignale 34a, 34b und 34c werden mit entsprechenden Mitteln der Steuer-/Auswerteeinrichtung 28 für alle Empfänger RxA, RxB, RxC und RxD kombiniert und für jeden Empfänger RxA, RxB, RxC und RxD einzelnen jeweils einer zweidimensionalen schnellen Fourier-Transformation unterzogen.

Aus den Ergebnissen der zweidimensionalen diskreten Fourier-Transformationen werden den Sendesignalen 32a, 32b und 32c entsprechende Zielsignale ZS von physikalisch vorhandenen Zielobjekten und deren jeweilige komplexwertige Amplituden ermittelt. Ein Zielobjekt ist ein Bereich des Objekts 18. Mehrere Zielobjekte können von demselben Objekt 18 oder von unterschiedlichen Objekten herrühren.

Dem ersten Sendesignal 32a entspricht pro Zielobjekt ein Zielsignal ZS. Ebenso entspricht dem dritten Sendesignal 32c pro Zielobjekt ein Zielsignal ZS. Aufgrund der Verschiebung der Phasenlage und der Sendepausen entsprechen bei dem zweiten Sendesignal 32b nach der Fourier-Transformation pro Zielobjekt zwei Zielsignale ZS. Jedem Zielobjekt entsprechen also insgesamt vier Zielsignale ZS.

Die Zielsignale ZS aus dem zweiten Sendesignal 32b sind in der Doppler-Dimension um die Hälfte des Eindeutigkeitsbereichs untereinander und um 1/4 beziehungsweise 3/4 des Eindeutigkeitsbereichs gegenüber dem Zielsignal ZS aus dem ersten Sendesignal 32a, also gegenüber der tatsächlichen Relativgeschwindigkeit, verschoben. Das Zielsignal ZS aus dem dritten Sendesignal 32c ist in der Doppler-Dimension um die Hälfte des Eindeutigkeitsbereichs gegenüber dem Zielsignal ZS aus dem ersten Sendesignal 32a, also gegenüber der tatsächlichen Relativgeschwindigkeit, verschoben.

Ferner sind - sofern die Sendesignale 32a, 32b und 32c mit derselben Leistung ausgesendet werden - für dasselbe Zielobjekt die komplexwertigen Amplituden der Zielsignale ZS aus dem zweiten Sendesignal 32b in Bezug auf Betrag und Phase identisch und in Bezug auf den Betrag geringer als die komplexwertigen Amplituden des Zielsignals ZS aus dem ersten Sendesignal 32a und des Zielsignals ZS aus dem dritten Sendesignal 32c. Die komplexwertigen Amplituden der Zielsignale ZS aus dem ersten Sendesignal 32a und dem dritten Sendesignal 32c sind in Bezug auf den Betrag gleich und in Bezug auf ihre jeweiligen Phasen unterschiedlich.

Die beiden Zielsignale ZS aus dem zweiten Sendesignal 32b besitzen dieselbe Phase, also denselben komplexen Amplitudenwert. Dies ermöglicht mit dem erfindungsgemäßen Verfahren die eindeutige Erkennung des zweiten Sendesignals 32b. Bezüglich des ersten Sendesignals 32a und des dritten Sendesignals 32c besteht eine Mehrdeutigkeit, die mit dem erfindungsgemäßen Verfahren aufgelöst wird.

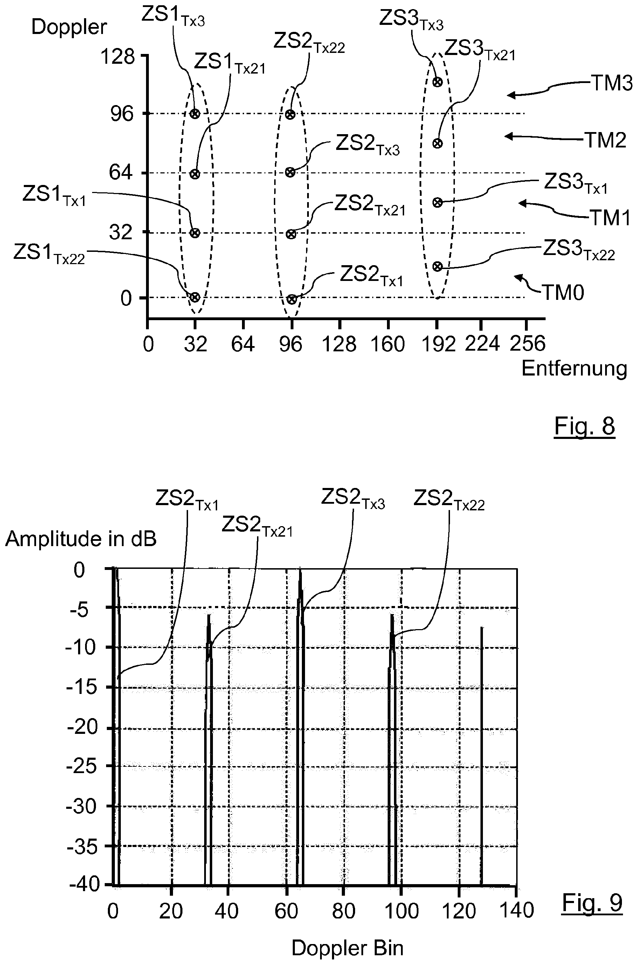

In der Figur 8 sind beispielhaft die Zielsignale ZS in einer Entfernungs-Doppler-Matrix jeweils mit einem Kreuz angedeutet. Die Entfernungstore entsprechen dabei so genannten "Range bins" oder Abstandsintervallen. Die Entfernungs-Doppler-Matrix umfasst beispielhaft 256 Entfernungstore. Die Dopplertore entsprechen sogenannten Relativgeschwindigkeitstoren oder "Doppler bins". Im vorliegenden Ausführungsbeispiel entspricht der Eindeutigkeitsbereich in der Dopplerdimension der Anzahl der Chirps und beträgt, wie bereits oben erwähnt, 128 Dopplertore. Die Entfernungs-Doppler-Matrix umfasst also beispielhaft 128 Dopplertore. Die Entfernungs-Doppler-Matrix besteht aus Zellen, welche jeweils durch einen Entfernungswert k und einen Dopplerwert I charakterisiert werden und eine komplexwertige Amplitude s(k, I) aufweist. Der Betrag der komplexwertigen Amplitude s(k, I) charakterisiert die Intensität eines etwaigen Signals in der Zelle oder, falls kein Signal empfangen wird, das dortige Rauschen.

Bei dem gezeigten Ausführungsbeispiel werden die Zielsignale ZS beispielhaft von drei Zielobjekten ermittelt. Dabei entsprechen die Zielsignale ZS, die sich im selben Entfernungstor mit dem demselben Entfernungswert, also in derselben Entfernung zu dem Radarsystem 12, befinden, demselben Zielobjekt.

Die Zuordnung der Zielsignale ZS zu den Sendesignalen 32a, 32b und 32c und den entsprechenden Zielobjekten erfolgt zwar erst in der weiter unten erläuterten Weise. Jedoch werden der besseren Verständlichkeit wegen die jeweiligen Bezeichnungen bereits an dieser Stelle eingeführt. Die Zielsignale sind den Zielobjekten entsprechend mit "ZS1 ", "ZS2" und "ZS3" bezeichnet. Die Zielsignale ZS, die von dem ersten Sendesignal 32a herrühren, sind zusätzlich mit "Tx1" gekennzeichnet. Die Zielsignale ZS, die dem zweiten Sendesignal 32b entsprechen, sind zusätzlich mit "Tx21 " oder "Tx22" bezeichnet, wobei "Tx21 " dem ersten Zielsignal und "Tx22" dem zweiten Zielsignal des zweiten Sendesignals 32b entspricht. Die Zielsignale ZS, die von dem dritten Sendesignal 32c herrühren, sind zusätzlich mit "Tx3" gekennzeichnet. Beispielsweise hat das dem zweiten Zielobjekt entsprechende Zielsignal, welches von dem ersten Sendesignal 32a herrührt, die Bezeichnung "$ZS2_{Tx1}$". Entsprechend haben die dem zweiten Zielobjekt entsprechenden Zielsignale, welche von dem zweiten Sendesignal 32b herrühren, die Bezeichnungen "$ZS2_{Tx21}$" und "$ZS2_{Tx22}$". Das dem dritten Zielobjekt entsprechende Zielsignal, welches von dem dritten Sendesignal 32c herrührt, hat die Bezeichnung "$ZS2_{Tx3}$".

In der Figur 8 sind jeweils die drei Zielsignale ZS, welche zu demselben Zielobjekt gehören, der einfachen Erkennbarkeit wegen mit einer gestrichelten Ellipse umgeben. Die zu dem ersten Zielobjekt gehörenden Zielsignale ZS1 haben denselben Entfernungswert, beispielsweise 32. Ferner haben die drei Zielsignale ZS1 die Dopplerwerte 0, 32, 64 und 96. Die zu dem zweiten Zielobjekt gehörenden Zielsignale ZS2 haben denselben Entfernungswert, beispielsweise 96, und die Dopplerwerte 0, 32, 64 und 96. Die zu dem dritten Zielobjekt gehörenden Zielsignale ZS3 haben denselben Entfernungswert, beispielsweise 192, und die Dopplerwerte 16, 48, 80 und 112.

Figur 9 zeigt beispielhaft die Zielsignale $ZS2_{Tx1}$, $ZS2_{Tx21}$, $ZS2_{Tx22}$ und $ZS2_{Tx3}$, welche zu dem zweiten Zielobjekt gehören, in einem Amplitudenbetrags-Doppler-Diagramm. Bei dem vorliegenden Ausführungsbeispiel sind die Relativgeschwindigkeit des zweiten Zielobjekts gegenüber dem Radarsystem 12 gleich 0. Beispielhaft sind die Amplituden normiert in Dezibel angegeben. Bei dem Beispiel sind die Beträge der Amplituden der Zielsignale $ZS2_{Tx21}$ und $ZS2_{Tx22}$ aus dem zweiten Sendesignal 32b um 6dB geringer als die Beträge der Amplituden des Zielsignals $ZS2_{Tx1}$ aus dem ersten Sendesignal 32a und des Zielsignals $ZS2_{Tx3}$ aus dem dritten Sendesignal 32c. Aus den Figuren 8 und 9 ist außerdem ersichtlich, dass eine Verschiebungssymmetrie um den halben Eindeutigkeitsbereich, nämlich 64 Doppler bins, in der Dopplerdimension besteht.

Im Folgenden wird erläutert, wie die Zielsignale ZS den entsprechenden Sendesignalen 32a, 32b und 32c zugeordnet und validiert werden.

Zur Zuordnung des ersten Sendesignals 32a und des zweiten Sendesignals 32b wird das Ergebnis aus der Fourier-Transformation für alle Empfänger RxA, RxB, RxC und RxD kombiniert verwendet. Zur weiter unten beschriebenen Zuordnung des dritten Sendesignals 32c werden die jeweiligen Ergebnisse aus den Fourier-Transformationen für die entsprechenden Empfänger RxA, RxB, RxC beziehungsweise RxD einzeln verwendet.

Die Entfernungs-Doppler-Matrix wird in Teilmatrizen TM0, TM1, TM2 und TM3 mit gleicher Ausdehnung in der Doppler-Dimension unterteilt. Dabei wird die Anzahl der Teilmatrizen TM berechnet aus dem Quotienten der Anzahl der Dopplertore des Eindeutigkeitsbereichs und dem kleinstmöglichen Doppler-Abstand von aus dem ersten Sendesignal 32a, dem zweiten Sendesignal 32b und den dritten Sendesignal 32c herrührenden Zielsignalen ZS ein und desselben Zielobjekts. Bei dem beispielhaften Eindeutigkeitsbereich von 128 Dopplertoren und einem kleinstmöglichen Dopplerabstand von 32 Dopplertoren wird die Entfernungs-Doppler-Matrix in vier Teilmatrizen TM0, TM1, TM2 und TM3 jeweils mit der Ausdehnung von 32 Dopplertoren unterteilt.

Für jeden Entfernungswert k werden die Beträge der komplexwertigen Amplituden s der jeweils bezüglich ihres Dopplerwerts I rangmäßig entsprechenden Zellen der Teilmatrizen TM0, TM1, TM2 und TM3 zu einem jeweiligen Spektrumswert $a_{k,lt}$ kombiniert. Mit anderen Worten werden die jeweiligen Zellen der Teilmatrizen TM0, TM1, TM2 und TM3 mit dem kleinsten Dopplerwert I, diejenigen Zellen mit dem zweitkleinsten Dopplerwert I, diejenigen Zellen mit dem drittkleinsten Dopplerwert I und diejenigen Zellen mit dem größten Dopplerwert I kombiniert. Zur Ermittlung der Spektrumswerte $a_{k,lt}$ werden die Beträge der Amplituden s der jeweiligen Zellen addiert und das Ergebnis quadriert. Dies geschieht nach folgender Formel:

$$a_{k,lt} = (\ |s(k,lt)| + |s(k,lt+32)| + |s(k,lt+64)| + |s(k,lt+96)|\ )^2$$

Dabei ist "k" der jeweilige Entfernungswert zwischen 0 und 256. "lt" ist ein Laufparameter für die Dopplerwerte I. "lt" läuft von 0 bis 32, also über die Ausdehnung einer Teilmatrix TM in der Dopplerdimension. s(k,lt) entspricht der in der Figur 8 untersten Teilmatrix TM0, welche sich zwischen den Dopplerwerten 0 und 32 erstreckt. s(k,lt+32) entspricht der in der Figur 8 zweituntersten Teilmatrix TM1, welche sich zwischen den Dopplerwerten 32 und 64 erstreckt. s(k,lt+64) entspricht der in der Figur 8 dritten Teilmatrix TM2, welche sich zwischen den Dopplerwerten 64 und 96 erstreckt. s(k,lt+96) entspricht der in der Figur 8 obersten Teilmatrix TM3, welche sich zwischen den Dopplerwerten 96 und 128 erstreckt.

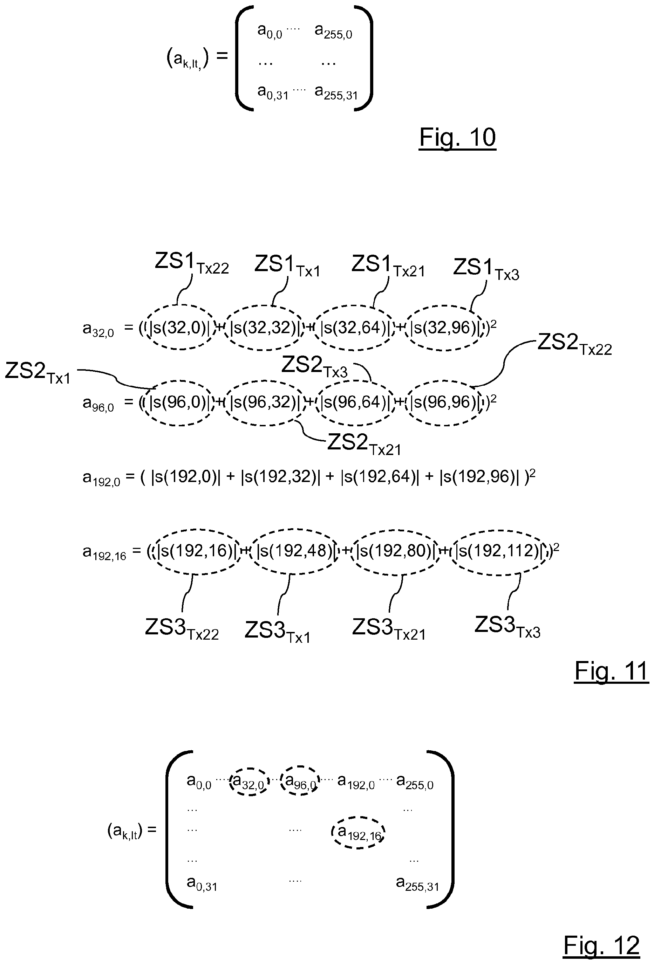

Die dadurch erhaltenen Spektrumswerte $a_{k,lt}$ können in einer 32 $\times$ 256 Spektrumsmatrix $(a_{k,lt})$ dargestellt werden, wie sie in der Figur 10 angedeutet ist. Dabei sind der besseren Übersichtlichkeit wegen beispielhaft lediglich vier der Spektrumswerte $a_{k,lt}$ bezeichnet.

In der Figur 11 sind beispielhaft Berechnungen für vier der Spektrumswerte $a_{k,lt}$ gezeigt. Unter Vorwegnahme des Ergebnisses sind zur einfacheren Erläuterung die Amplituden s von Zellen, in denen Zielsignale ZS liegen, mit gestrichelten Ellipsen umgeben und mit den entsprechenden Bezeichnungen versehen. Die Amplituden s, welche nicht mit Ellipsen markiert sind, weisen lediglich Rauschen auf. Die entsprechende Spektrumsmatrix $(a_{k,lt})$ ist in der Figur 12 dargestellt. Dabei sind der besseren Übersichtlichkeit wegen die beispielhaft berechneten und die bereits in Figur 10 dargestellten Spektrumswerte $a_{k,lt}$ gezeigt. Die Spektrumswerte $a_{k,lt}$, welche Amplituden s von Zellen, in denen Zielsignale ZS liegen, sind der einfacheren Erkennbarkeit wegen mit gestrichelten Ellipsen umgeben.

Aus allen Spektrumswerten $a_{k,lt}$ werden beispielsweise mit einem Detektionsalgorithmus zur Ermittlung einer konstanten Falschalarmrate (CFAR) diejenigen ermittelt, welche über einer vorgegebenen Schwelle liegen und als zu einem jeweiligen Zielsignal ZS1, ZS2 und ZS3 gehörende Ziel-Spektrumswerte erkannt. Im vorliegenden Beispiel sind dies die Spektrumswerte $a_{32,0}$, $a_{96,0}$, und $a_{192,16}$, welche im Folgenden der besseren Übersichtlichkeit wegen als Ziel-Spektrumswerte $az_{32,0}$, $az_{96,0}$, und $az_{192,16}$ bezeichnet werden.

Für jeden Ziel-Spektrumswert $az_{k,lt}$ werden die komplexwertigen Amplituden $s_0 = s(k,lt)$, $s_1 = s(k,lt+32)$, $s_2 = s(k,lt+64)$ und $s_3 = s(k,lt+96)$ der zu diesem Ziel-Spektrumswert $az_{k,lt}$ führenden Zellen mit demselben Entfernungswert k gemäß folgender Formeln paarweise zu einem ersten Vergleichswert $X_0$ und einem zweiten Vergleichswert $X_1$ kombiniert.

$$X_0 = |s_0 - s_2|^2$$

$$X_1 = |s_1 - s_3|^2$$

Dabei wird eine Differenz der komplexwertigen Amplitude $s_0$ der zu dem betreffenden Ziel-Spektrumswert az gehörenden Zelle mit dem kleinsten Dopplerwert I und der komplexwertigen Amplitude $s_2$ der zu dem Ziel-Spektrumswert az gehörenden Zelle mit dem drittkleinsten Dopplerwert I gebildet. Der Betrag der Differenz wird quadriert und dem ersten Vergleichswert $X_0$ zugewiesen. Ferner wird eine Differenz der komplexwertigen Amplitude $s_1$ der zu demselben Ziel-Spektrumswert az gehörenden Zelle mit dem zweitkleinsten Dopplerwert I und der komplexwertigen Amplitude $s_3$ der zu dem Ziel-Spektrumswert az gehörenden Zelle mit dem größten Dopplerwert I gebildet. Der Betrag der Differenz wird quadriert und dem zweiten Vergleichswert $X_1$ zugewiesen.

Im Folgenden wird dies beispielhaft für das zweite Zielobjekt mit dem Entfernungswert k=32 durchgeführt. Bei dem Beispiel entspricht dem zweiten Zielobjekt der Ziel-Spektrumswert $az_{96,0}$ mit den komplexwertigen Amplituden $s(96,0)$, $s(96,32)$, $s(96,64)$ und $s(96,96)$. Entsprechend sind beispielhaft

$$X_{0,Ziel2} = |s(96,0) - s(96,64)|^2$$

$$X_{1,Ziel2} = |s(96,32) - s(96,96)|^2$$

In Anlehnung an das Doppler-Amplituden-Diagramm aus der Figur 9 wird angenommen, dass eine Zelle mit einem Zielsignal $ZS1_{Tx1}$, welches von dem ersten Sendesignal 32a herrührt, den gleichen Amplitudenbetrag $|s(k, l)|$ hat wie eine Zelle mit einem Zielsignal $ZS1_{Tx3}$, welches von dem dritten Sendesignal 32c herrührt, jedoch eine andere Phase. Die Zellen mit den Zielsignalen $ZS1_{TX21}$ und $ZS1_{TX22}$, welche von dem zweiten Sendesignal 32b herrühren, weisen beispielhaft die gleiche komplexwertige Amplitude mit dem gleichen Amplitudenbetrag $|s(k, l)|$ mit der gleichen Phase auf. Zellen ohne Zielsignal, von denen in dem Beispiel für dem Entfernungswert k= 32 keine vorhanden ist, weisen im Mittel deutlich kleinere Amplitudenbeträge auf als Zellen mit Zielsignal. Zellen ohne Zielsignal weisen in der Regel lediglich Rauschen auf.

Für das zweite Zielobjekt ergeben sich folgende Zusammenhänge für die Amplituden:

$$s(96,0) \neq s(96,64)$$

$$s(96,32) = s(96,96)$$

Für die Vergleichswerte $X_{0,Ziel2}$ und $X_{1,Ziel2}$ ergibt sich:

$$X_{0,Ziel2} = |s(96,0) - s(96,64)|^2 > 0$$

$$X_{1,Ziel2} = |s(96,32) - s(96,96)|^2 = 0$$

Die Vergleichswerte $X_{0,Ziel2}$ und $X_{1,Ziel2}$ werden verglichen. Die Signale, welche zu den Zellen gehören, aus deren Amplituden s der kleinere der beiden Vergleichswerte $X_{0,Ziel2}$ oder $X_{1,Ziel2}$ gebildet ist, werden als die zwei Zielsignale $ZS_{Tx21}$ und $ZS_{Tx22}$ für dasselbe Zielobjekt, die von dem zweiten Sendesignal 32b herrühren, validiert.

Bei dem Beispiel ist der kleinere Vergleichswert $X_{1,Ziel2}$. Der Vergleichswert $X_{1,Ziel2}$ ist aus den Amplituden $s_1(96,32)$ und ss(96,96) gebildet. Es werden also die Signale, welche zu den Zellen (96, 32) und (96, 96) der Entfernungs-Doppler-Matrix gehören, als die beiden Zielsignale $ZS2_{Tx21}$ und $ZS2_{Tx22}$ des zweiten Zielobjekts aus dem zweiten Sendesignal 32b validiert.

Die Amplituden $s_0(96,0)$ und $s_2(96,64)$, welche zu dem größeren Vergleichswert $X_{0,Ziel2}$ gehören, werden im Folgenden zugeordnet:

Hierzu werden, wie weiter oben bereits erwähnt, die Ergebnisse der Fourier-Transformationen für jeden Empfänger RxA, RxB, RxC und RxD einzelnen verwendet.

Es wird eine Differenz der Phase der komplexwertigen Amplitude $s(96,0)_{RxD}$ und der Phase beispielhaft der komplexwertigen Amplitude $s(96,32)_{RxA}$ gebildet. Der Betrag dieser Differenz wird einem dritten Vergleichswert $Y_{0,Ziel2}$ zugewiesen.

Ferner wird eine Differenz der Phase der anderen der komplexwertigen Amplitude $s(96,64)_{RxD}$ und der Phase der komplexwertigen Amplitude $s(96,32)_{RxA}$ gebildet. Der Betrag dieser Differenz wird einem vierten Vergleichswert $Y_{1,Ziel2}$ zugewiesen.

Entsprechend ist beispielhaft:

$$Y_{0,Ziel2} = |\, \text{Phase} (s(96,0)_{RxD}) - \text{Phase} (s(96,32)_{RxA})\,|$$

$$Y_{1,Ziel2} = |\, \text{Phase} (s(96,64)_{RxD}) - \text{Phase} (s(96,32)_{RxA})\,|$$

Dabei wird die komplexwertige Amplitude $s(96,0)_{RxD}$ des mit dem Empfänger RxD empfangenen Sendesignals verwendet. Das von dem Empfänger RxD empfangene zweite Sendesignal 32b des zweiten Senders Tx2 wird zur Bildung des doppelbelegten virtuellen Element 2A/3D nicht verwendet. Die komplexwertige Amplitude $s(96,0)_{RxD}$ entspricht rangmäßig der Amplitude $s(96,0)$ bei der kombinierten Betrachtung der Empfänger RxA, RxB, RxC, RxD, aus denen der größere der ersten beiden Vergleichswerte, beispielhaft $X_{0,Ziel2}$, gebildet ist.

Ferner wird die andere komplexwertige Amplitude $s_2(96,64)_{RxD}$ des mit dem Empfänger Rx empfangenen Sendesignals verwendet.. Die andere komplexwertige Amplitude $s_2(96,64)_{RxD}$ entspricht rangmäßig der anderen der beiden Amplituden $s_2(96,64)$ bei der kombinierten Betrachtung der Empfänger RxA, RxB, RxC und RxD, aus denen der grö-βere der ersten beiden Vergleichswerte, beispielhaft $X_{0,Ziel2}$, gebildet ist.

Die komplexwertige Amplitude $s_1(96,32)_{RxA}$ wird mit dem Empfänger RxA empfangen. Der Empfänger RxA führt zu dem doppelbelegten virtuellen Element 2A/3D, an dem der zweite Sender Tx2 beteiligt ist. Anstelle der komplexwertigen Amplitude $s(96,32)_{RxA}$ kann auch die komplexwertige Amplitude $s(96, 96)_{RxA}$ oder ein Mittelwert der komplexwertigen Amplitude $s(96,32)_{RxA}$ und der komplexwertige Amplitude $s(96,96)_{RxA}$ verwendet werden.

Der dritte Vergleichswert $Y_{0,Ziel2}$ und der vierte Vergleichswert $Y_{1,Ziel2}$ werden verglichen. Das Signal, welches zu den Zellen gehören, aus deren Amplitude $s_0(96,0)_{RxD}$ oder $s_2(96,64)_{RxD}$ der kleinere der beiden Vergleichswerte $Y_{0,Ziel2}$ oder $Y_{1,Ziel2}$ gebildet ist, wird als das Zielsignal $ZS2_{Tx3}$ für dasselbe Zielobjekt 18, das von dem dritten Sendesignal 32c herrührt, validiert. Das Signal, welches zu den Zellen gehört, aus deren Amplitude $s_0(96,O)_{RxD}$ oder $s_2(96,64)_{RxD}$ der größere der beiden Vergleichswerte $Y_{0,Ziel2}$ oder $Y_{1,Ziel2}$ gebildet ist, wird als das Zielsignal $ZS2_{Tx1}$ für dasselbe Zielobjekt 18, das von dem ersten Sendesignal 32a herrührt, validiert.

Bei dem Ausführungsbeispiel werden die Amplitude $s_0(96,0)_{RxD}$ für das Zielsignal $ZS2_{Tx1}$ von dem ersten Sendesignal 32a und die Amplitude $s_2(96,64)_{RxD}$ für das Zielsignal $ZS2_{Tx3}$ von dem dritten Sendesignal 32c validiert. Diese Validierung gilt entsprechend für die Kombination der Empfänger RxA, RxB, RxC und RxD.

Aus den validierten Zielsignalen $ZS2_{Tx1}$, $ZS2_{Tx21}$, $ZS2_{Tx22}$ und $ZS2_{Tx3}$, der Kombination der Empfänger RxA, RxB, RxC und RxD werden Objektinformationen des zweiten Zielobjekts, beispielsweise eine Geschwindigkeit und eine Entfernung des Zielobjekts relativ zu dem Radarsystem 12 ermittelt. Dazu werden beispielhaft die komplexwertigen Amplituden, welche den virtuellen Elementen des virtuellen Arrays 36 auf der gleichen vertikalen Höhe entsprechen, nämlich 1A, 1B, 1C, 1D, 3A, 3B, 3C, 2A/3D, 2B, 2C, und 2D, in hier nicht interessierende Weise mittels eines digitalen Beamforming Algorithmus verarbeitet.

Da das erste Sendesignal 32a nicht codiert und nicht in seiner Phase verschoben ist, kann der dem ersten Zielsignal 38a zugehörige Dopplerwert I als der korrekte Dopplerwert betrachtet werden und daraus die korrekte Entfernung und Relativgeschwindigkeit des zweiten Zielobjekts abgeleitet werden.

Die beispielhaft anhand des zweiten Zielobjekts erläuterten Verfahrensschritte werden für das erste Zielobjekt und das dritte Zielobjekt entsprechend durchgeführt. Auf diese Weise werden auch für die anderen Zielobjekte die entsprechenden Zielsignale $ZS1_{Tx1}$, $ZS1_{Tx21}$, $ZS1_{Tx22}$ und $ZS1_{Tx3}$ beziehungsweise $ZS3_{Tx1}$, $ZS3_{Tx21}$, $ZS3_{Tx22}$ und $ZS3_{Tx3}$ validiert und daraus die entsprechenden Objektinformationen ermittelt.

Das gesamte Verfahren wird zyklisch durchgeführt, sodass der Überwachungsbereich 14 kontinuierlich auf Objekte 18 hin überwacht und entsprechende erfasste Objekte 18 verfolgt werden können.

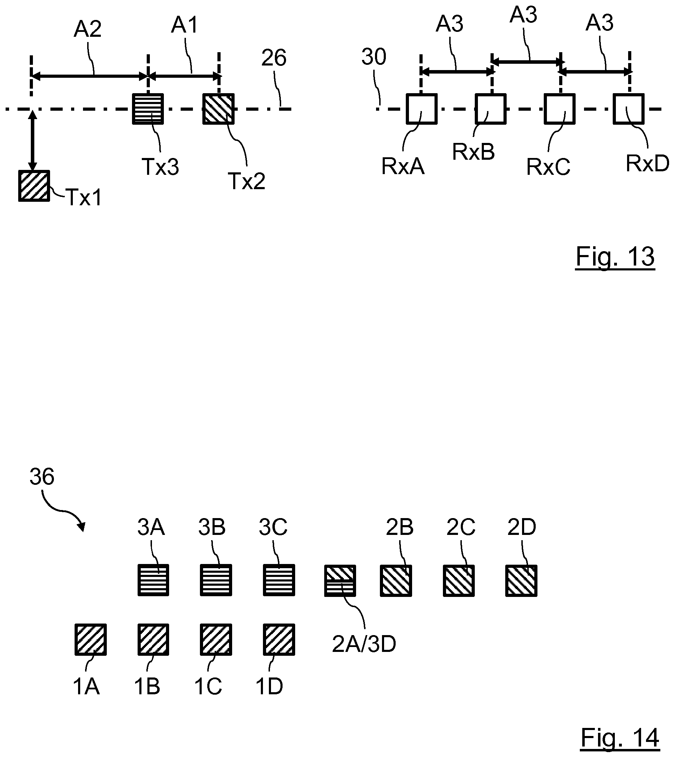

In den Figuren 13 und 14 ist eine Anordnung von Sendern und Empfängern gemäß zweiten Ausführungsbeispiel gezeigt. Figur 13 zeigt dabei die räumliche Anordnung der drei Sender Tx1, Tx2, und Tx3 und der vier Empfänger RxA, RxB, RxC und RxD. Im Unterschied zum ersten Ausführungsbeispiel aus den Figuren 1 bis 12 ist beim zweiten Ausführungsbeispiel der erste Sender Tx1 neben der Sendergerade 26, in normaler Orientierung des Radarsystems 12, nach unten versetzt, angeordnet. Der zweite Abstand A2 zu dem dritten Sender Tx3 in Projektion auf die Sendergerade 26 entspricht der halben Wellenlänge des ersten Sendesignals 32a.

Figur 14 zeigt das entsprechende virtuelle Array 36. Aufgrund des Versatzes des ersten Senders Tx1 sind die entsprechenden virtuellen Elemente 1A, 1B, 1C und 1D im virtuellen Array 36 ebenfalls nach unten versetzt. Durch die Verkürzung des Abstandes A2 im Vergleich zum ersten Ausführungsbeispiel ist das virtuelle Element 1B unter dem virtuellen Element 3A, das virtuelle Element 1C unter dem virtuellen Element 3B und das virtuelle Element 1D unter dem virtuellen Element 3C angeordnet.

Bei einem nicht gezeigten Ausführungsbeispiel kann alternativ der zweite Abstand A2 so gewählt werden, dass er in Projektion auf die Sendergerade 26 dem zweifachen oder dreifachen der halben Wellenlänge des ersten Sendesignals 32a entspricht. In diesem Fall verringert sich die Anzahl der virtuellen Elemente, welche zur Bestimmung der Elevation eingesetzt werden können.

Die Validierung der Sendesignale 32a, 32b und 32c erfolgt beim zweiten Ausführungsbeispiel analog zum ersten Ausführungsbeispiel.

Für die Bestimmung des Azimutwinkels werden analog zum ersten Ausführungsbeispiel die komplexen Amplitudenwerte, welche zu den virtuellen Elementen 3A, 3B, 3C, 2A/3D, 2B, 2C und 2D auf gleicher Höhe gehören, mittels eines digitalen Beamforming Algorithmus verarbeitet.

Für die Bestimmung der Elevation wird eine Phasendifferenz zwischen den Amplituden der validierten Zielsignale, welche zu den virtuellen Elementen gehören, die im virtuellen Array 36 jeweils übereinander angeordnet sind, ermittelt:

Phasendifferenz (3A-1B)

Phasendifferenz (3B-1C)

Phasendifferenz (3C-1D)

Diese Phasendifferenzen können beispielsweise mithilfe einer durch Messungen ermittelten Zuordnungstabelle direkt in einen Elevationswinkel übersetzt werden.

Alternativ oder zusätzlich kann zunächst eine Mittelung der drei oben bezeichneten Phasendifferenzen durchgeführt werden und anschließend die Umrechnung in den Elevationswinkel erfolgen.

**Patentansprüche**

1. Verfahren zur Ermittlung von wenigstens einer Objektinformation wenigstens eines Zielobjektes (18), das mit einem Radarsystem (12) insbesondere eines Fahrzeugs (10) erfasst wird, bei dem

   - mit wenigstens drei Sendern (Tx1, Tx2, Tx3) Sendesignale (32a, 32b, 32c) in einen Überwachungsbereich (14) des Radarsystems (12) gesendet werden,
   - mit wenigstens zwei Empfängern (RxA, RxB, RxC, RxD) an dem wenigstens einen Zielobjekt (18) reflektierte Echos der Sendesignale (32a, 32b, 32c) als Empfangssignale (34a, 34b, 34c) empfangen und sofern erforderlich in eine für eine elektronische Steuer- und/oder Auswerteeinrichtung (28) verwertbare Form gebracht werden,

- die Empfangssignale (34a, 34b, 34c) wenigstens einer diskreten Fourier-Transformation unterzogen werden,
- aus dem Ergebnis der wenigstens einen Fourier-Transformation wenigstens ein Zielsignal ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) ermittelt wird,
- aus dem wenigstens einen Zielsignal ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) wenigstens eine Objektinformation ermittelt wird,
- auf der Senderseite aus einem frequenzmodulierten Dauerstrichsignal wenigstens ein erstes Sendesignal (32a), wenigstens ein zweites Sendesignal (32b) und wenigstens ein drittes Sendesignal (32c) erzeugt werden, wobei das wenigstens eine zweite Sendesignal (32b) und das wenigstens eine dritte Sendesignal (32c) mittels Phasenmodulationen gegeneinander und gegenüber dem wenigstens einen ersten Sendesignal (32a) codiert werden, so dass eine zumindest temporäre signaltechnische Orthogonalität zwischen den Sendesignalen (32a, 32b, 32c) erzielt wird,
- das wenigstens eine erste Sendesignal (32a) mit wenigstens einem ersten Sender (Tx1), das wenigstens eine zweite Sendesignal (32b) mit wenigstens einem zweiten Sender (Tx2) und das wenigstens eine dritte Sendesignal (32c) mit wenigstens einem dritten Sender (Tx3) gleichzeitig in den Überwachungsbereich (14) des Radarsystems (12) gesendet werden,
- die Empfangssignale (34a, 34b, 34c) wenigstens einer mehrdimensionalen diskreten Fourier-Transformation unterzogen werden,

**dadurch gekennzeichnet, dass**

das wenigstens eine zweite Sendesignal (32b) mit regelmäßigen Sendepausen vorgegebener Länge ausgesendet wird,

das Ergebnis der wenigstens einen mehrdimensionalen Fourier-Transformation für alle Empfänger (RxA, RxB, RxC, RxD) kombiniert und jeden Empfänger (RxA, RxB, RxC, RxD) einzeln jeweils als Entfernungs-Doppler-Matrix für einen Eindeutigkeitsbereich bezüglich einer Dopplerdimension realisiert wird, wobei die Entfernungs-Doppler-Matrix aus Zellen besteht, welche jeweils durch einen Dopplerwert (I) und einen Entfernungswert (k) charakterisiert werden und eine komplexwertige Amplitude ($s(k, I)$) aufweisen, die eine Signalintensität charakterisiert,

- die Entfernungs-Doppler-Matrix in vier Teilmatrizen (TM) mit gleicher Ausdehnung bezüglich der Doppler-Dimension unterteilt wird,
- für jeden Entfernungswert (k) die Beträge der Amplituden ($s(k, I)$) der jeweils bezüglich ihres Dopplerwerts (I) rangmäßig entsprechenden Zellen der Teilmatrizen (TM) zu einem jeweiligen Spektrumswert ($a_{k,lt}$) kombiniert werden,
- aus den Spektrumswerten ($a_{k,lt}$) diejenigen ermittelt werden, welche über einer vorgegebenen Schwelle liegen, und als zu einem jeweiligen Zielsignal ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) gehörende Ziel-Spektrumswerte ($az_{k,lt}$) erkannt werden,

für wenigstens einen Ziel-Spektrumswert ($az_{k,lt}$) aus der Kombination aller Empfänger (RxA, RxB, RxC, RxD)

- eine Differenz der komplexwertigen Amplituden ($s(k, I)$) der zu diesem Ziel-Spektrumswert ($az_{k,lt}$) gehörenden Zellen mit dem kleinsten Dopplerwert (I) und dem drittkleinsten Dopplerwert (I) gebildet, der Betrag dieser Differenz quadriert und einem ersten Vergleichswert ($X_0$) zugewiesen wird,
- und eine Differenz der komplexwertigen Amplituden ($s(k, I)$) der zu diesem Ziel-Spektrumswert ($az_{k,lt}$) gehörenden Zellen mit dem zweitkleinsten Dopplerwert (I) und dem größten Dopplerwert (I) gebildet, der Betrag dieser Differenz quadriert und einem zweiten Vergleichswert ($X_1$) zugewiesen wird,
- der erste Vergleichswert ($X_0$) und der zweite Vergleichswert ($X_1$) verglichen und die Signale, welche zu den Zellen gehören, aus deren Amplituden ($s(k, I)$) der kleinere der beiden Vergleichswerte ($X_0$, $X_1$) gebildet ist, als die zwei Zielsignale ($ZS1_{Tx21}$, $ZS1_{Tx22}$, $ZS2_{Tx21}$, $ZS2_{Tx22}$, $ZS3_{Tx21}$, $ZS3_{Tx22}$) für dasselbe Zielobjekt (18), die von dem wenigstens einen zweiten Sendesignal (32b) herrühren, validiert werden.

2. Verfahren nach Anspruch 1, **dadurch gekennzeichnet, dass** der wenigstens eine dritte Sender (Tx3) und der wenigstens eine zweite Sender (Tx2) entlang einer gedachten Sendergerade (26) angeordnet werden, wobei die Sendergerade (26) quer zu den Hauptsenderichtungen der Sender (Tx2, Tx3) verläuft.

3. Verfahren nach Anspruch 2, **dadurch gekennzeichnet, dass** der wenigstens eine dritte Sender (Tx3) in einem ersten Abstand (A1) zu dem wenigstens einen zweiten Sender (Tx2) angeordnet wird, wobei der erste Abstand (A1) als ganzzahliges Vielfaches, insbesondere dreifaches, der halben Wellenlänge des wenigstens einen ersten Sendesignals (32a) vorgegeben wird.

4. Verfahren nach Anspruch 2 oder 3, **dadurch gekennzeichnet, dass** der wenigstens eine erste Sender (Tx1) auf der gedachten Sendergeraden (26) angeordnet wird oder der wenigstens eine erste Sender (Tx1) neben der gedachten Sendergeraden (26) angeordnet wird.

5. Verfahren nach einem der Ansprüche 2 bis 4, **dadurch gekennzeichnet, dass** der wenigstens eine erste Sender (Tx1) und der wenigstens eine zweite Sender (Tx2) in Projektion auf die Sendergerade (26) betrachtet in unterschiedlichen Abständen (A1, A2) zu dem wenigstens einen dritten Sender (Tx3) angeordnet werden.

6. Verfahren nach einem der vorigen Ansprüche, **dadurch gekennzeichnet, dass** die wenigstens zwei Empfänger (RxA, RxB, RxC, RxD) auf einer gedachten Empfängergerade (30) angeordnet werden, wobei die Empfängergeraden (30) quer zu den Hauptempfangsrichtungen der Empfänger (RxA, RxB, RxC, RxD) verläuft und wobei die benachbarten Empfänger (RxA, RxB, RxC, RxD) jeweils in einem Abstand (A3) zueinander angeordnet werden, welcher der halben Wellenlänge des wenigstens einen ersten Sendesignals (32a) entspricht.

7. Verfahren nach einem der vorigen Ansprüche, **dadurch gekennzeichnet, dass** auf der Empfängerseite aus dem Ergebnis der wenigstens einen mehrdimensionalen diskreten Fourier-Transformation für alle Empfänger (RxA, RxB, RxC, RxD) kombiniert und jeden Empfänger (RxA, RxB, RxC, RxD) einzeln jeweils eine Mehrzahl von Zielsignalen (ZS1$_{Tx1}$, ZS1$_{Tx21}$, ZS1$_{Tx22}$, ZS1$_{Tx3}$, ZS2$_{Tx1}$, ZS2$_{Tx21}$, ZS2$_{Tx22}$, ZS2$_{Tx3}$, ZS3$_{Tx1}$, ZS3$_{Tx21}$, ZS3$_{Tx22}$, ZS3$_{Tx3}$) ermittelt wird, wobei pro physikalisch vorhandenem Zielobjekt (18) eines der Zielsignale (ZS1$_{Tx1}$, ZS2$_{Tx1}$, ZS3$_{Tx1}$) dem wenigstens einen ersten Sendesignal (32a) entspricht, zwei der Zielsignale (ZS1$_{Tx21}$, ZS1$_{Tx22}$, ZS2$_{Tx21}$, ZS2$_{Tx22}$, ZS3$_{Tx21}$, ZS3$_{Tx22}$) dem wenigstens einen zweiten Sendesignal (32b) entsprechen und eines der Zielsignale (ZS1$_{Tx3}$, ZS2$_{Tx3}$, ZS3$_{Tx3}$) dem wenigstens einen dritten Sendesignal (32c) entspricht.

8. Verfahren nach einem der vorigen Ansprüche, **dadurch gekennzeichnet, dass**

- ausgehend von einer vorgegebenen räumlichen Anordnung der Sender (Tx1, Tx2, Tx3) und der Empfänger (RxA, RxB, RxC, RxD) eine geometrische Faltung oder geometrische Projektion durchgeführt wird und daraus ein virtuelles Array (36) erzeugt wird und dasjenige Element (2A/3D) des virtuellen Arrays (36) als doppelbelegtes virtuelles Element (2A/3D) identifiziert wird, auf das sowohl wenigstens ein Empfangssignal (34b) des wenigstens einen zweiten Sendesignals (32b), welches von wenigstens einem der Empfänger (RxA) empfangen wird, als auch wenigstens ein Empfangssignal (34c) eines der beiden anderen jeweils wenigstens einen Sendesignale (32c), welches von wenigstens einem anderen der Empfänger (RxD) empfangen wird, fällt,
- eine Differenz der Phase einer der komplexwertigen Amplituden (s(k, l)$_{RxD}$) desjenigen Empfängers (RxD) verwendet wird, von dem das zweite Sendesignal (32b) des zweiten Senders (Tx2) zur Bildung des doppelbelegten virtuellen Element (2A/3D) nicht verwendet wird, wobei diese komplexwertige Amplitude (s(k, l)$_{RxD}$) rangmäßig einer der beiden Amplituden (s(k, l)) bei der kombinierten Betrachtung der Empfänger (RxA, RxB, RxC, RxD) entspricht, aus denen der größere der ersten beiden Vergleichswerte (X$_0$, X$_1$) gebildet ist,

und der Phase einer oder dem Mittelwert beider komplexwertigen Amplituden (s(k, l)$_{RxA}$), desjenigen Empfängers (RxA) verwendet wird/werden, der zu dem doppelbelegten virtuellen Element (2A/3D) führt, an dem der zweite Sender (Tx2) beteiligt ist, gebildet wird und der Betrag dieser Differenz einem dritten Vergleichswert (Y$_0$) zugewiesen wird,

- und eine Differenz der Phase der anderen der komplexwertigen Amplitude (s(k,l)$_{RxD}$) desjenigen Empfängers (RxD) verwendet wird, von dem das zweite Sendesignal (32b) des zweiten Senders (Tx2) zur Bildung des doppelbelegten virtuellen Element (2A/3D) nicht verwendet wird, wobei diese andere komplexwertige Amplitude (s(k,l)$_{RxD}$) rangmäßig der anderen der beiden Amplituden (s(k,l)) bei der kombinierten Betrachtung der Empfänger (RxA, RxB, RxC, RxD) entspricht, aus denen der größere der ersten beiden Vergleichswerte (X$_0$, X$_1$) gebildet ist,

und der Phase einer oder dem Mittelwert beider komplexwertigen Amplituden (s(k,l)$_{RxA}$) desjenigen Empfängers (RxA) verwendet wird/werden, der zu dem doppelbelegten virtuellen Element (2A/3D) führt, an dem der zweite Sender (Tx2) beteiligt ist, gebildet wird und der Betrag dieser Differenz einem vierten Vergleichswert (Y$_1$) zugewiesen wird,

- der dritte Vergleichswert (Y$_0$) und der vierte Vergleichswert (Y$_1$) verglichen werden und das Signal, welches zu den Zellen gehören, aus deren Amplituden $(s(k,l)_{RxD})$ der kleinere der beiden Vergleichswerte $(Y_0, Y_1)$ gebildet ist, als das Zielsignal $(ZS1_{Tx3}, ZS2_{Tx3}, ZS3_{Tx3})$ für dasselbe Zielobjekt (18), das von dem wenigstens einen dritten Sendesignal (32c) herrührt, validiert wird und das Signal, welches zu den Zellen gehören, aus deren Amplituden $(s(k,l)_{RxD})$ der größere der beiden Vergleichswerte $(Y_0, Y_1)$ gebildet ist, als das Zielsignal $(ZS1_{Tx1}, ZS2_{Tx1}, ZS3_{Tx1})$ für dasselbe Zielobjekt (18), das von dem wenigstens einen ersten Sendesignal (32a) herrührt, validiert wird.

9. Verfahren nach einem der vorigen Ansprüche, **dadurch gekennzeichnet, dass** die Länge der Sendepausen des wenigstens einen zweiten Sendesignals (32b) als Chirpdauer oder einem ganzzahligen Vielfachen der Chirpdauer des wenigstens einen ersten Sendesignals (32b) vorgegeben wird.

10. Verfahren nach einem der vorigen Ansprüche, **dadurch gekennzeichnet, dass** im Zuge der Ermittlung wenigstens einer Objektinformation eine Phasendifferenz zwischen wenigstens zwei Zielsignalen $(ZS1_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$ ermittelt wird und/oder ein digitaler Beamforming Algorithmus durchgeführt wird.

11. Verfahren nach einem der vorigen Ansprüche, **dadurch gekennzeichnet, dass** wenigstens ein Sendesignal (32b, 32c) nach jeder Frequenzrampe des frequenzmodulierten Dauerstrichsignals mit einem Phasenwechsel zwischen 0° und 180° belegt wird.

12. Radarsystem (12) insbesondere eines Fahrzeugs (10) zur Ermittlung von wenigstens einer Objektinformation wenigstens eines Zielobjekts (18),

- mit wenigstens drei Sendern (Tx1, Tx2, Tx3) zum Senden von Sendesignalen (32a, 32b, 32c) in einen Überwachungsbereich (14),
- mit wenigstens zwei Empfängern (RxA, RxB, RxC, RxD ) zum Empfangen von an dem wenigstens einen Zielobjekt (18) reflektierten Echos der Sendesignale (32a, 32b, 32c) als Empfangssignale (34a, 34b, 34c) und
- mit wenigstens einer Steuer- und/oder Auswerteeinrichtung (28),
- wobei die wenigstens eine Steuer- und/oder Auswerteeinrichtung (28) Mittel aufweist zur Ermittlung wenigstens eines Zielsignals $(ZSI_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$ aus wenigstens einer diskreten Fourier-Transformation der Empfangssignale (34a, 34b) und zur Ermittlung wenigstens einer Objektinformation aus wenigstens einem Zielsignal $(ZS1_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$,

**dadurch gekennzeichnet, dass**
die wenigstens einen Steuer- und/oder Auswerteeinheit (28) Mittel aufweist zur Durchführung des Verfahrens nach einem der vorigen Ansprüche.

13. Radarsystem nach Anspruch 12, **dadurch gekennzeichnet, dass** zwei der Sender (Tx2, Tx3) in einem Abstand (A1) zueinander angeordnet sind, welcher einem ganzzahligen vielfachen, insbesondere dem dreifachen, der halben Wellenlänge eines der Sendesignale (32a) entspricht.

14. Fahrerassistenzsystem (20) eines Fahrzeugs (10), aufweisend

- wenigstens eine elektronische Steuereinrichtung (24) zur Steuerung von Funktionseinrichtungen des Fahrzeugs (10) abhängig von Objektinformationen, welche durch wenigstens ein Radarsystem (12) bereitgestellt werden, und
- wenigstens ein Radarsystem (12) nach Anspruch 112 oder 13 zur Ermittlung von wenigstens einer Objektinformation wenigstens eines Zielobjekts (18), wobei das wenigstens eine Radarsystem (12) aufweist
- wenigstens drei Sender (Tx1, Tx2, Tx3) zum Senden von Sendesignalen (32a, 32b, 32c) in einen Überwachungsbereich (14),
- wenigstens zwei Empfängern (RxA, RxB, RxC, RxD) zum Empfangen von an dem wenigstens einen Zielobjekt (18) reflektierten Echos der Sendesignale (32a, 32b, 32c) als Empfangssignale (34a, 34b, 34c) und
- wenigstens eine Steuer- und/oder Auswerteeinrichtung (28),
- wobei die wenigstens eine Steuer- und/oder Auswerteeinrichtung (28) Mittel aufweist zur Ermittlung wenigstens eines Zielsignals $(ZSI_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$ aus wenigstens einer mehrdimensionalen diskreten Fourier-Transformation der Empfangssignale (34a, 34b) und zur Ermittlung wenigstens einer Objektinformation aus wenigstens einem Zielsignal

$(ZSI_{Tx1}, ZS1_{Tx21}, ZS1_{Tx22}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$,

**dadurch gekennzeichnet, dass**

- die wenigstens eine Steuer- und/oder Auswerteeinheit (28) Mittel aufweist zur Durchführung des Verfahrens nach einem der Ansprüche 1 bis 11.

**Claims**

1. Method for determining at least one object information item of at least one target object (18) which is sensed with a radar system (12), in particular of a vehicle (10), in which

- transmission signals (32a, 32b, 32c) are transmitted into a monitoring range (14) of the radar system (12) with at least three transmitters (Tx1, Tx2, Tx3),
- echoes, which are reflected at the at least one target object (18), of the transmission signals (32a, 32b, 32c) are received as received signals (34a, 34b, 34c) with at least two receivers (RxA, RxB, RxC, RxD), and if necessary are converted into a form which can be used by an electronic control and/or evaluation device (28),
- the received signals (34a, 34b, 34c) are subjected to at least one discrete Fourier transformation,
- at least one target signal $(ZS1_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$ is determined from the result of the at least one Fourier transformation,
- at least one object information item is determined from the at least one target signal $(ZS1_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$ ,
- at the transmitter end at least one first transmission signal (32a), at least one second transmission signal (32b) and at least one third transmission signal (32c) are generated from a frequency-modulated continuous wave signal, wherein the at least one second transmission signal (32b) and the at least one third transmission signal (32c) are encoded by means of phase modulations with respect to each other and with respect to the at least one first transmission signal (32a), with the result that at least temporary signal orthogonality is brought about between the transmission signals (32a, 32b, 32c).
- the at least one first transmission signal (32a) is transmitted with at least one first transmitter (Tx1), the at least one second transmission signal (32b) is transmitted with at least one second transmitter (Tx2), and the at least one third transmission signal (32c) is transmitted with at least one third transmitter (Tx3) simultaneously into the monitoring range (14) of the radar system (12),
- the received signals (34a, 34b, 34c) are subjected to at least one multi-dimensional discrete Fourier transformation,

**characterized in that**

the at least one second transmission signal (32b) is emitted with regular transmission pauses of a predefined length,
the result of the at least one multi-dimensional Fourier transformation is respectively implemented in combination for all the receivers (RxA, RxB, RxC, RxD) and individually for each receiver (RxA, RxB, RxC, RxD) as a range Doppler matrix for a uniqueness range with respect to a Doppler dimension, wherein the range Doppler matrix is composed of cells which are each **characterized by** a Doppler value (1) and a range value (k) and have a complex-valued amplitude $(s(k, 1))$ which characterizes a signal intensity,

- the range Doppler matrix is divided into four sub-matrices (TM) with the same extent with respect to the Doppler dimension,
- for each range value (k), the absolute values of the amplitudes $(s(k, 1))$ of the cells of the sub-matrices (TM), which each correspond in priority with respect to their Doppler value (1), are combined to form a respective spectrum value $(a_{k,lt})$,
- from the spectrum values $(a_{k,lt})$, those values are determined which are above a predefined threshold and are detected as target spectrum values $(az_{k,lt})$ which are associated with a respective target signal $(ZS1_{Tx1}, ZS1_{Tx21}, ZS1_{Tx22}, ZS1_{Tx3}, ZS2_{Tx1}, ZS2_{Tx21}, ZS2_{Tx22}, ZS2_{Tx3}, ZS3_{Tx1}, ZS3_{Tx21}, ZS3_{Tx22}, ZS3_{Tx3})$,

for at least one target spectrum value $(az_{k,lt})$ from the combination of all the receivers (RxA, RxB, RxC, RxD)

- a difference between the complex-valued amplitudes $(s(k, 1))$ of the cells which are associated with this target spectrum value ($az_{k,lt}$) and have the lowest Doppler value (1) and the third-lowest Doppler value (1) is formed, and the absolute value of this difference is squared and assigned to a first comparison value ($X_0$),

- and a difference between the complex-valued amplitudes ($s(k, 1)$) of the cells which are associated with this target spectrum value ($az_{k,lt}$) and have the second-lowest Doppler value (1) and the highest Doppler value (1) is formed, and the absolute value of this difference is squared and assigned to a second comparison value ($X_1$),

- the first comparison value ($X_0$) and the second comparison value ($X_1$) are compared and the signals which are associated with the cells from whose amplitudes ($s(k, 1)$) the lower of the two comparison values ($X_0$, $X_1$) is formed are validated as the two target signals ($ZS1_{Tx21}$, $ZS1_{Tx22}$, $ZS2_{Tx21}$, $ZS2_{Tx22}$, $ZS3_{Tx21}$, $ZS3_{Tx22}$) which originate from the at least one second transmission signal (32b), for the same target object (18).

2. Method according to Claim 1, **characterized in that** the at least one third transmitter (Tx3) and the at least one second transmitter (Tx2) are arranged along a virtual transmitter line (26), wherein the transmitter line (26) runs transversely with respect to the main transmission directions of the transmitters (Tx2, Tx3).

3. Method according to Claim 2, **characterized in that** the at least one third transmitter (Tx3) is arranged at a first distance (A1) from the at least one second transmitter (Tx2), wherein the first distance (A1) is specified as an integral multiple, in particular multiplication by three, of half the wavelength of the at least one first transmission signal (32a).

4. Method according to Claim 2 or 3, **characterized in that** the at least one first transmitter (Tx1) is arranged on the virtual transmitter line (26) or the at least one first transmitter (Tx1) is arranged next to the virtual transmitter line (26).

5. Method according to one of Claims 2 to 4, **characterized in that** the at least one first transmitter (Tx1) and the at least one second transmitter (Tx2) are arranged, considered in a projection onto the transmitter line (26), at different distances (A1, A2) from the at least one third transmitter (Tx3).

6. Method according to one of the preceding claims, **characterized in that** the least two receivers (RxA, RxB, RxC, RxD) are arranged on a virtual receiver line (30), wherein the receiver line (30) runs transversely with respect to the main reception directions of the receivers (RxA, RxB, RxC, RxD), and wherein the adjacent receivers (RxA, RxB, RxC, RxD) are each arranged at a distance (A3) from one another, which corresponds to half the wavelength of the at least one first transmission signal (32a).

7. Method according to one of the preceding claims, **characterized in that**, at the receiver end, a multiplicity of target signals ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) are respectively determined in combination for all the receivers (RxA, RxB, RxC, RxD) and individually for each receiver (RxA, RxB, RxC, RxD), from the result of the at least one multi-dimensional discrete Fourier transformation, wherein, for each physically present target object (18), one of the target signals ($ZS1_{Tx1}$, $ZS2_{Tx1}$, $ZS3_{Tx1}$) corresponds to the at least one first transmission signal (32a), two of the target signals ($ZS1_{Tx21}$, $ZS1_{Tx22}$, $ZS2_{Tx21}$, $ZS2_{Tx22}$, $ZS3_{Tx21}$, $ZS3_{Tx22}$) correspond to the at least one second transmission signal (32b), and one of the target signals ($ZS1_{Tx3}$, $ZS2_{Tx3}$, $ZS3_{Tx3}$) corresponds to the at least one third transmission signal (32c).

8. Method according to one of the preceding claims, **characterized in that,**

- starting from a predefined spatial arrangement of the transmitters (Tx1, Tx2, Tx3) and of the receivers (RxA, RxB, RxC, RxD) geometric folding or geometric projection is carried out, and a virtual array (36) is generated therefrom, and that element (2A/3D) of the virtual array (36) is identified as a double-assigned virtual element (2A/3D) to which both at least one received signal (34b) of the at least one second transmission signal (32b) which is received by at least one of the receivers (RxA) is applied, and at least one received signal (34c) of one of the two other respective at least one transmission signals (32c) which is received by at least one other of the receivers (RxD) is applied,

- a difference is formed between the phase of one of the complex-valued amplitudes ($s(k, l)_{RxD}$) of that receiver (RxD) is used which does not use the second transmission signal (32b) of the second transmitter (Tx2) to form the double-assigned virtual element (2A/3D), wherein this complex-valued amplitude ($s(k, 1)_{RxD}$) corresponds in priority to one of the two amplitudes ($s(k, 1)$) from which the higher of the first two comparison values ($X_0$, $X_1$) is formed, in the combined consideration of the receivers (RxA, RxB, RxC, RxD), and the phase of one complex-valued amplitude ($s(k, 1)_{RxA}$), or the mean value of the two complex-valued amplitudes ($s(k, 1)_{RxA}$), of that receiver (RxA) is/are used which leads to the double-assigned virtual element (2A/3D) in which the second transmitter (Tx2) is involved,

and the absolute value of this difference is assigned to a third comparison value ($Y_0$),

- and a difference is formed between the phase of the other of the complex-valued amplitudes ($s(k, 1)_{RxD}$) of that receiver (RxD) is used which does not use the second transmission signal (32b) of the second transmitter (Tx2) to form the double-assigned virtual element (2A/3D), wherein this other complex-valued amplitude ($s(k, l)_{RxD}$) corresponds in priority to the other of the two amplitudes ($s(k, l)$) in the combined consideration of the receivers (RxA, RxB, RxC, RxD), from which amplitudes the higher of the first two comparison values ($X_0$, $X_1$) is formed,

and the phase of one complex-valued amplitude ($s(k, l)_{RxA}$), or the mean value of the two complex-valued amplitudes ($s(k, l)_{RxA}$), of that receiver (RxA) is/are used which leads to the double-assigned virtual element (2A/3D) in which the second transmitter (Tx2) is involved, and the absolute value of this difference is assigned to a fourth comparison value ($Y_1$),

- the third comparison value ($Y_0$) and the fourth comparison value ($Y_1$) are compared, and the signal which is associated with the cells from whose amplitudes ($s(k,l)_{RxD}$) the lower of the two comparison values ($Y_0$, $Y_1$) is formed is validated as the target signal ($ZS1_{Tx3}$, $ZS2_{Tx3}$, $ZS3_{Tx3}$) for the same target object (18) which originates from the at least one third transmission signal (32c), and the signal which is associated with the cells from whose amplitudes ($s(k,l)_{RxD}$) the higher of the two comparison values ($Y_0$, $Y_1$) is formed is validated as the target signal ($ZS1_{Tx1}$, $ZS2_{Tx1}$, $ZS3_{Tx1}$) for the same target object (18) which originates from the at least one first transmission signal (32a).

9. Method according to one of the preceding claims, **characterized in that** the length of the transmission pauses of the at least one second transmission signal (32b) is predefined as a chirp duration or an integral multiple of the chirp duration of the at least one first transmission signal (32b).

10. Method according to one of the preceding claims, **characterized in that,** in the course of the determination of at least one object information item, a phase difference between at least two target signals ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) is determined and/or a digital beam forming algorithm is carried out.

11. Method according to one of the preceding claims, **characterized in that** a phase change between 0° and 180° is applied to at least one transmission signal (32b, 32c) after each frequency ramp of the frequency-modulated continuous wave signal.

12. Radar system (12), in particular of a vehicle (10), for determining at least one object information item of at least one target object (18),

- having at least three transmitters (Tx1, Tx2, Tx3) for transmitting transmission signals (32a, 32b, 32c) into a monitoring range (14),
- having at least two receivers (RxA, RxB, RxC, RxD) for receiving echoes, which are reflected at the at least one target object (18), of the transmission signals (32a, 32b, 32c) as received signals (34a, 34b, 34c) and
- having at least one control and/or evaluation device (28),
- wherein the at least one control and/or evaluation device (28) has means for determining at least one target signal ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) from at least one discrete Fourier transformation of the received signals (34a, 34b) and for determining at least one object information item from at least one target signal ($ZS_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$),

**characterized in that**
the at least one control and/or evaluation unit (28) has means for carrying out the method according to one of the preceding claims.

13. Radar system according to Claim 12, **characterized in that** two of the transmitters (Tx2, Tx3) are arranged at a distance (A1) from one another, which corresponds to an integral multiple, in particular multiplication by three, of half the wavelength of one of the transmission signals (32a).

14. Driver assistance system (20) of a vehicle (10), having

- at least one electronic control device (24) for controlling functional devices of the vehicle (10) on the basis of object information which is made available by at least one radar system (12), and
- at least one radar system (12) according to Claim 12 or 13 for determining at least one object information item of at least one target object (18), wherein the at least one radar system (12) has
- at least three transmitters (Tx1, Tx2, Tx3) for transmitting transmission signals (32a, 32b, 32c) into a monitoring range (14),
- at least two receivers (RxA, RxB, RxC, RxD) for receiving echoes, which are reflected at the at least one target object (18), of the transmission signals (32a, 32b, 32c) as received signals (34a, 34b, 32c) and
- at least one control and/or evaluation device (28),
- wherein the at least one control and/or evaluation device (28) has means for determining at least one target signal ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) from at least one multi-dimensional discrete Fourier transformation of the received signals (34a, 34b) and for determining at least one object information item from at least one target signal ($ZS1_{Tx1}$, $ZS1_{Tx21}$, $ZS1_{Tx22}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) ,

**characterized in that**

- the at least one control and/or evaluation unit (28) has means for carrying out the method according to one of Claims 1 to 11.

**Revendications**

1. Procédé de détermination d'au moins une information d'objet d'au moins un objet cible (18) qui est détecté par un système radar (12), en particulier d'un véhicule (10), procédé dans lequel

- des signaux d'émission (32a, 32b, 32c) sont émis dans une zone de surveillance (14) du système radar (12) à l'aide d'au moins trois émetteurs (Tx1, Tx2, Tx3),
- les échos des signaux d'émission (32a, 32b, 32c), qui sont réfléchis par au moins un objet cible (18), sont reçus en tant que signaux de réception (34a, 34b, 34c) à l'aide d'au moins deux récepteurs (RxA, RxB, RxC, RxD) et, si nécessaire, sont mis sous une forme utilisable par un dispositif électronique de commande et/ou d'évaluation (28),
- les signaux de réception (34a, 34b, 34c) sont soumis à au moins une transformation de Fourier discrète,
- au moins un signal cible ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) est déterminé à partir du résultat de l'au moins une transformation de Fourier,
- au moins une information d'objet est déterminée à partir de l'au moins un signal cible ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$),
- au moins un premier signal d'émission (32a), au moins un deuxième signal d'émission (32b) et au moins un troisième signal d'émission (32c) sont générés du côté émetteur à partir d'un signal à onde continue modulé en fréquence, l'au moins un deuxième signal d'émission (32b) et l'au moins un troisième signal d'émission (32c) étant codés l'un par rapport à l'autre et par rapport à l'au moins un premier signal d'émission (32a) au moyen de modulations de phase de façon à obtenir au moins une orthogonalité temporaire en termes de technique de signal entre les signaux d'émission (32a, 32b, 32c),
- l'au moins un premier signal d'émission (32a), l'au moins un deuxième signal d'émission (32b) et l'au moins un troisième signal d'émission (32c) sont émis simultanément dans la zone de surveillance (14) du système radar (12) respectivement à l'aide d'au moins un premier émetteur (Tx1), d'au moins un deuxième émetteur (Tx2) et d'au moins un troisième émetteur (Tx3),
- les signaux de réception (34a, 34b, 34c) sont soumis à au moins une transformation de Fourier discrète multidimensionnelle,

**caractérisé en ce que**

l'au moins un deuxième signal d'émission (32b) est émis avec des pauses d'émission régulières de longueur spécifiée,
le résultat de l'au moins une transformation de Fourier multidimensionnelle est réalisé, de manière combinée pour tous les récepteurs (RxA, RxB, RxC, RxD) et individuellement pour chaque récepteur (RxA, RxB, RxC, RxD), sous forme de matrice Doppler de distance pour une zone de clarté par rapport à une dimension Doppler, la matrice Doppler de distance comprenant des cellules qui sont chacune **caractérisées par** une valeur Doppler (I) et une valeur de distance (k) et ont une amplitude à valeur complexe (s(k, I)) qui caractérise une intensité de signal,

- la matrice Doppler de distance étant divisée en quatre sous-matrices (TM) de même étendue par rapport à la dimension Doppler,
- pour chaque valeur de distance (k), les valeurs absolues des amplitudes (s(k, I)) des cellules des sous-matrices (TM), qui correspondent en termes de rang par rapport à leur valeur Doppler (I), étant combinées pour former une valeur spectrale respective ($a_{k,lt}$),
- celles qui sont situées au-dessus d'un seuil spécifié et sont reconnues comme des valeurs spectrales cibles ($az_{k,lt}$) appartenant à un signal cible respectif ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$), étant déterminées à partir des valeurs spectrales ($az_{k,lt}$)

pour au moins une valeur spectrale cible ($az_{k,lt}$) de la combinaison de tous les récepteurs (RxA, RxB, RxC, RxD)

- une différence des amplitudes à valeurs complexes (s(k, I)) des cellules appartenant à cette valeur spectrale cible ($az_{k,lt}$) étant formées avec la plus petite valeur Doppler (I) et la troisième plus petite valeur Doppler (I), la valeur absolue de cette différence étant élevée au carré et affectée à une première valeur de comparaison ($X_0$),
- et une différence des amplitudes à valeurs complexes (s(k, I)) des cellules appartenant à cette valeur spectrale cible ($az_{k,lt}$) étant formée avec la deuxième plus petite valeur Doppler (I) et la plus grande valeur Doppler (I), la valeur absolue de cette différence étant élevée au carré et affectée à une deuxième valeur de comparaison ($X_1$),
- la première valeur de comparaison ($X_0$) et la deuxième valeur de comparaison ($X_1$) étant comparées et les signaux, qui appartiennent aux cellules à partir des amplitudes (s(k, I)) desquelles la plus petite des deux valeurs de comparaison ($X_0$, $X_1$) est formée, étant validées comme étant les deux signaux cibles ($ZS1_{Tx21}$, $ZS1_{Tx22}$, $ZS2_{Tx21}$, $ZS2_{Tx22}$, $ZS3_{Tx21}$, $ZS3_{Tx22}$) pour le même objet cible (18), qui proviennent d'au moins un deuxième signal d'émission (32b).

2. Procédé selon la revendication 1, **caractérisé en ce que** l'au moins un troisième émetteur (Tx3) et l'au moins un deuxième émetteur (Tx2) sont disposés le long d'une droite d'émetteur imaginaire (26), la droite d'émetteur (26) s'étendant transversalement aux directions d'émetteur principales des émetteurs (Tx2, Tx3) .

3. Procédé selon la revendication 2, **caractérisé en ce que** l'au moins un troisième émetteur (Tx3) est disposé à une première distance (A1) de l'au moins un deuxième émetteur (Tx2), la première distance (A1) étant spécifiée comme un multiple entier, en particulier le triple, de la moitié de la longueur d'onde de l'au moins un premier signal d'émission (32a).

4. Procédé selon la revendication 2 ou 3, **caractérisé en ce que** l'au moins un premier émetteur (Ix1) est disposé sur la droite d'émetteur imaginaire (26) ou l'au moins un premier émetteur (Ix1) est disposé à côté de la droite d'émetteur imaginaire (26).

5. Procédé selon l'une des revendications 2 à 4, **caractérisé en ce que** l'au moins un premier émetteur (Ix1) et l'au moins un deuxième émetteur (Tx2) sont disposés, dans une vue en projection sur la droite d'émetteur (26), à des distances différentes (A1, A2) de l'au moins un troisième émetteur (Tx3).

6. Procédé selon l'une des revendications précédentes, **caractérisé en ce que** les au moins deux récepteurs (RxA, RxB, RxC, RxD) sont disposés sur une droite de récepteur imaginaire (30), la droite du récepteur (30) s'étendant transversalement aux directions de réception principales des récepteurs (RxA, RxB, RxC, RxD) et les récepteurs voisins (RxA, RxB, RxC, RxD) étant chacun disposés à une distance (A3) les uns des autres qui correspond à la moitié de la longueur d'onde de l'au moins un premier signal d'émission (32a).

7. Procédé selon l'une des revendications précédentes, **caractérisé en ce que**, du côté récepteur, une pluralité de signaux cibles ($ZS1_{Tx1}$, $ZS1_{Tx21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) sont déterminés, de manière combinée pour tous les récepteurs (RxA, RxB, RxC, RxD) et individuellement pour chaque récepteur (RxA, RxB, RxC, RxD), à partir du résultat de l'au moins une transformation de Fourier discrète multidimensionnelle ; pour chaque objet cible (18) physiquement présent, l'un des signaux cibles ($ZS1_{Tx1}$, $ZS2_{Tx1}$, $ZS3_{Tx1}$) correspondant à l'au moins un premier signal d'émission (32a), deux des signaux cibles ($ZS1t_{Tx21}$,

$ZS1_{Tx22}$, $ZS2_{Tx22}$, $ZS2_{Tx22}$, $ZS3_{Tx21}$, $ZS3_{Tx22}$) correspondant à l'au moins un deuxième signal d'émission (32b) et l'un des signaux cibles ($ZS1_{Tx3}$, $ZS2_{Tx3}$, $ZS3_{Tx3}$) correspondant à l'au moins un troisième signal d'émission (32c).

8. Procédé selon l'une des revendications précédentes, **caractérisé en ce que**

- un repliement géométrique ou une projection géométrique est effectué(e) à partir d'une disposition spatiale spécifiée des émetteurs (Tx1, Tx2, Tx3) et des récepteurs (RxA, RxB, RxC, RxD), et, à partir de là, un réseau virtuel (36) est généré et l'élément (2A/3D) du réseau virtuel (36) est identifié comme un élément virtuel à double occupation (2A/3D) auquel sont incidents au moins un signal de réception (34b) de l'au moins un deuxième signal d'émission (32b), qui est reçu par au moins un des récepteurs (RxA), ainsi qu'au moins un signal de réception (34c) de l'un des deux autres au moins un signal d'émission (32c), qui est reçu par au moins un autre des récepteurs (RxD),
- une différence est formée entre la phase d'une des amplitudes à valeurs complexes ($s(k, l)_{rxd}$) du récepteur (RxD) est utilisée à partir duquel le deuxième signal d'émission (32b) du deuxième émetteur (Tx2) n'est pas utilisé pour former l'élément virtuel à double occupation (2A/3D), cette amplitude à valeur complexe ($s(k, l)_{rxd}$) correspondant en termes de rang à l'une des deux amplitudes ($s(k, l)$), lorsque l'on considère les récepteurs (RxA, RxB, RxC, RxD) en combinaison, à partir desquels la plus grande des deux premières valeurs de comparaison ($X_0$, $X_1$) est formée,
et la phase d'une ou de la moyenne des deux amplitudes à valeurs complexes ($s(k, l)_{rxa}$) du récepteur (RxA) est/sont utilisée(s) qui conduit à l'élément virtuel à double occupation (2A/3D) dans lequel le deuxième émetteur (Tx2) est impliqué,
et la valeur absolue de cette différence est affectée à une troisième valeur de comparaison ($Y_0$),

- et une différence est formée entre la phase de l'autre amplitude à valeur complexe ($s(k,l)_{RxD}$) du récepteur (RxD) est utilisée à partir duquel le deuxième signal d'émission (32b) du deuxième émetteur (Tx2) n'est pas utilisé pour former l'élément virtuel à double occupation (2A/3D), cette autre amplitude à valeurs complexes ($s(k,l)_{RxD}$) correspondant en termes de rang à l'autre des deux amplitudes ($s(k,l)$), lorsqu'on considère les récepteurs (RxA, RxB, RxC, RxD) en combinaison, à partir desquels la plus grande des deux premières valeurs de comparaison ($X_0$, X1) est formée,

et la phase d'une ou de la moyenne des deux amplitudes à valeurs complexes ($s(k,l)_{RxA}$) du récepteur (RxA) est/sont utilisée(s) qui conduit à l'élément virtuel à double occupation (2A/3D) dans lequel le deuxième émetteur (Tx2) est impliqué,
et la valeur absolue de cette différence étant affectée à une quatrième valeur de comparaison ($Y_1$),

- la troisième valeur de comparaison ($Y_0$) et la quatrième valeur de comparaison ($Y_1$) sont comparées et le signal qui appartient aux cellules à partir des amplitudes ($s(k,l)_{RxD}$) desquelles la plus petite des deux valeurs de comparaison ($Y_0$, $Y_1$) est formée, est validé comme étant le signal cible ($ZS1_{Tx3}$, $ZS2_{Tx3}$, $ZS3_{Tx3}$) pour le même objet cible (18), qui provient de l'au moins un troisième signal d'émission (32c), et le signal qui appartient aux cellules à partir des amplitudes ($s(k,l)_{RxD}$) desquelles la plus grande des deux valeurs de comparaison ($Y_0$, $Y_1$) est formée est validé comme étant le signal cible ($ZS1_{Tx1}$, $ZS2_{Tx1}$, $ZS3_{Tx1}$) pour le même objet cible (18), qui provient de l'au moins un premier signal d'émission (32a).

9. Procédé selon l'une des revendications précédentes, **caractérisé en ce que** la longueur des pauses d'émission de l'au moins un deuxième signal d'émission (32b) est spécifiée comme étant une durée de piaulement (chirp) ou un multiple entier de la durée de piaulement de l'au moins un premier signal d'émission (32b).

10. Procédé selon l'une des revendications précédentes, **caractérisé en ce que**, au cours de la détermination d'au moins une information d'objet, une différence de phase entre au moins deux signaux cibles ($ZS1_{Tx1}$, $ZS1_{TX21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) est déterminé et/ou un algorithme de formation de faisceau numérique est exécuté.

11. Procédé selon l'une des revendications précédentes, **caractérisé en ce que** au moins un signal d'émission (32b, 32c) est pourvu d'un changement de phase compris entre 0° et 180° après chaque rampe de fréquence du signal à onde continue modulé en fréquence.

12. Système radar (12), notamment d'un véhicule (10), destiné à déterminer au moins une information d'objet d'au moins un objet cible (18), ledit système radar comprenant

- au moins trois émetteurs (Tx1, Tx2, Tx3) destinés à émettre des signaux d'émission (32a, 32b, 32c) dans une zone de surveillance (14),
- au moins deux récepteurs (RxA, RxB, RxC, RxD) destinés à recevoir des échos des signaux d'émission (32a, 32b, 32c), qui sont réfléchis par au moins un objet cible (18), comme signaux de réception (34a, 34b, 34c) et
- au moins un dispositif de commande et/ou d'évaluation (28),
- l'au moins un dispositif de commande et/ou d'évaluation (28) comportant des moyens destinés à déterminer au moins un signal cible ($ZS1_{Tx1}$, $ZS1_{TX21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) à partir d'au moins une transformation de Fourier discrète des signaux de réception (34a, 34b) et à déterminer au moins une information d'objet à partir d'au moins un signal cible ($ZS1_{Tx1}$, $ZS1_{TX21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$),

**caractérisé en ce que**
l'au moins un dispositif de commande et/ou d'évaluation (28) comporte des moyens destinés à mettre en oeuvre le procédé selon l'une des revendications précédentes.

**13.** Système radar selon la revendication 12, **caractérisé en ce que** deux des émetteurs (Tx2, Tx3) sont disposés à une distance (A1) l'un de l'autre qui correspond à un multiple entier, notamment le triple, de la moitié de la longueur d'onde d'un des signaux d'émission (32a).

**14.** Système d'aide à la conduite (20) d'un véhicule (10), ledit système comportant

- au moins un dispositif de commande électronique (24) destiné à commander des dispositifs fonctionnels du véhicule (10) en fonction d'informations d'objet qui sont fournies par au moins un système radar (12), et
- au moins un système radar (12) selon la revendication 12 ou 13 destiné à déterminer au moins une information d'objet d'au moins un objet cible (18), l'au moins un système radar (12) comportant
- au moins trois émetteurs (Tx1, Tx2, Tx3) destinés à émettre des signaux d'émission (32a, 32b, 32c) dans une zone de surveillance (14),
- au moins deux récepteurs (RxA, RxB, RxC, RxD) destinés à recevoir des échos des signaux d'émission (32a, 32b, 32c), qui sont réfléchis par au moins un objet cible (18), comme signaux de réception (34a, 34b, 34c) et
- au moins un dispositif de commande et/ou d'évaluation (28),
- l'au moins un dispositif de commande et/ou d'évaluation (28) comportant des moyens destinés à déterminer au moins un signal cible ($ZS1_{Tx1}$, $ZS1_{TX21}$, $ZS1_{Tx22}$, $ZS1_{Tx3}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$) d'au moins une transformation de Fourier discrète multidimensionnelle des signaux de réception (34a, 34b) et à déterminer au moins une information d'objet à partir d'au moins un signal cible ($ZS1_{Tx1}$, $ZS1_{TX21}$, $ZS1_{Tx22}$, $ZS2_{Tx1}$, $ZS2_{Tx21}$, $ZS2_{Tx22}$, $ZS2_{Tx3}$, $ZS3_{Tx1}$, $ZS3_{Tx21}$, $ZS3_{Tx22}$, $ZS3_{Tx3}$),

**caractérisé en ce que**

- l'au moins un dispositif de commande et/ou d'évaluation (28) comporte des moyens destinés à mettre en oeuvre le procédé selon l'une des revendications 1 à 11.

10

12

<u>Fig. 1</u>

10

20

Tx1  Tx3  Tx2

32a
32b
32c

12

RxA

34c

28

RxC

RxD

RxB

24

34b  34a

22    22

14

18

16

<u>Fig. 2</u>

Fig. 3

Fig. 4

32a

f | 0°   0°   0°   0°   0°   0°

...

Fig. 5

t

32b

f | 0°        180°        0°

...

Fig. 6

t

32c

f | 0°   180°   0°   180°   0°   180°

...

Fig. 7

t

Fig. 8

Fig. 9

$$(a_{k,lt,}) = \begin{pmatrix} a_{0,0} \cdots a_{255,0} \\ \cdots \qquad \cdots \\ a_{0,31} \cdots a_{255,31} \end{pmatrix}$$

<div align="right"><u>Fig. 10</u></div>

$ZS1_{Tx22}$ $\quad$ $ZS1_{Tx1}$ $\quad$ $ZS1_{Tx21}$ $\quad$ $ZS1_{Tx3}$

$a_{32,0} = ( |s(32,0)| + |s(32,32)| + |s(32,64)| + |s(32,96)| )^2$

$ZS2_{Tx1}$ $\qquad\qquad\qquad$ $ZS2_{Tx3}$ $\qquad\qquad\qquad$ $ZS2_{Tx22}$

$a_{96,0} = ( |s(96,0)| + |s(96,32)| + |s(96,64)| + |s(96,96)| )^2$

$ZS2_{Tx21}$

$a_{192,0} = ( |s(192,0)| + |s(192,32)| + |s(192,64)| + |s(192,96)| )^2$

$a_{192,16} = ( |s(192,16)| + |s(192,48)| + |s(192,80)| + |s(192,112)| )^2$

$ZS3_{Tx22}$ $\quad$ $ZS3_{Tx1}$ $\quad$ $ZS3_{Tx21}$ $\quad$ $ZS3_{Tx3}$

<div align="right"><u>Fig. 11</u></div>

$$(a_{k,lt}) = \begin{pmatrix} a_{0,0} \cdots a_{32,0} \quad a_{96,0} \cdots a_{192,0} \cdots a_{255,0} \\ \cdots \qquad\qquad\qquad\qquad \cdots \\ \cdots \qquad \cdots \quad a_{192,16} \\ \cdots \qquad\qquad\qquad\qquad \cdots \\ a_{0,31} \qquad \cdots \qquad\qquad a_{255,31} \end{pmatrix}$$

<div align="right"><u>Fig. 12</u></div>

A2  A1  26

Tx1  Tx3  Tx2

30  A3  A3  A3

RxA  RxB  RxC  RxD

Fig. 13

36

3A  3B  3C  2B  2C  2D

2A/3D

1A  1B  1C  1D

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004006519 B4

- US 2018120427 A1

**In der Beschreibung aufgeführte Nicht-Patentliteratur**

- **CHRISTIAN STURM et al.** Automotive Fast-Chip MIMO Radar with Simultaneous Transmission in a Doppler-Multiplex. *19th International Radar Symposium,* 20. Juni 2018, 1-6